# EUROPEAN PATENT SPECIFICATION

(11) **EP 4 023 516 B1**
(45) Date of publication and mention of the grant of the patent: **28.08.2024**
(21) Application number: 20892002.5
(22) Date of filing: 27.11.2020
(51) Int. Cl.: B62D 15/02, B60W 50/14, B60W 50/10

(54) **AUTOMATIC PARKING METHOD, DEVICE, AND SYSTEM**
AUTOMATISCHES EINPARKVERFAHREN, -VORRICHTUNG UND -SYSTEM
PROCÉDÉ, DISPOSITIF ET SYSTÈME DE STATIONNEMENT AUTOMATIQUE

(30) Priority: 29.11.2019 CN 201911206064
(43) Date of publication of application: 06.07.2022
(73) Proprietor: Great Wall Motor Company Limited, Baoding, Hebei 071000 (CN)
(72) Inventor: HAO, Peng, Baoding, Hebei 071000 (CN); GAO, Tong, Baoding, Hebei 071000 (CN); WEI, Hong, Baoding, Hebei 071000 (CN); MA, Bingxu, Baoding, Hebei 071000 (CN); ZHANG, Yongcai, Baoding, Hebei 071000 (CN); DONG, Weixing, Baoding, Hebei 071000 (CN)
(74) Representative: dompatent von Kreisler Selting Werner - Partnerschaft von Patent- und Rechtsanwälten mbB
(86) International application number: PCT/CN2020/132385
(87) International publication number: WO 2021/104477

(56) References cited:
- WO-A1-2018/235273
- CN-A- 104 828 074
- CN-A- 105 939 901
- CN-A- 109 641 621
- CN-A- 110 228 466
- CN-A- 110 228 466
- CN-A- 110 228 466
- CN-A- 110 341 702
- CN-A- 110 901 631
- DE-A1- 102016 226 008
- DE-A1- 102018 101 454
- US-A1- 2015 375 741

## Description

The present application claims the priority of the Chinese patent application filed on November 29th, 2019 before the Chinese Patent Office with the application number of 201911206064.6 and the title of "AUTOMATIC PARKING METHOD, DEVICE, AND SYSTEM.

### TECHNICAL FIELD

The present disclosure relates to the technical field of vehicles, and more particularly, to an automatic parking method, device, and system.

### BACKGROUND

With the improvement of people's living standards, vehicles have become an indispensable tool for people to travel. However, due to the limited parking slots in cities, how to find available parking slots in such limited numbers and park successfully after finding it have become the common problems for drivers. Therefore, automatic parking technologies have been developed rapidly.

The existing automatic parking technology is that in the automatic parking process, after a mobile terminal connects with an automatic parking system controller of a vehicle, operation data of a driver in the mobile terminal, such as coordinate data pressed by the driver on a screen of a mobile, is continuously sent to the automatic parking system controller of the vehicle through a communication channel, and the automatic parking system controller of the vehicle calculates and analyzes the operation data, and determines an intention of the driver corresponding to the operation data, so as to send a signal to a relevant system of the vehicle to continue parking or stop parking, and the relevant system of the vehicle performs corresponding actions according to the received signal, thus completing the parking process.

However, in the current solution, the automatic parking system controller of the vehicle is configured to determine the intention of the driver. Therefore, the automatic parking system controller needs to constantly receive the operation data of the driver sent by the mobile terminal through the communication channel. Due to the large capacity of the operation data, a large amount of communication data resources is occupied, which reduces the efficiency of the automatic parking process, and is not conducive to expand other functions that need to utilize the communication data resources, and meanwhile, resources of the automatic parking system controller are occupied.

CN 110 228 466 A and DE 10 2016/226008 A1 describe background art for the present invention.

### SUMMARY

The present invention is defined in claims 1, 6, 8 and 9.

In view of this, the present disclosure aims to provide an automatic parking method, device and system, in order to solve the problems in the prior art that, the mobile terminal directly sends the operation data input by the user at the mobile terminal to the automatic parking system controller of the vehicle, so that the efficiency of the automatic parking process is low due to the large capacity of the operation data when the vehicle completes the automatic parking process.

To achieve the above objects, the technical solutions of the present disclosure are implemented as follows:
An automatic parking method applied to a mobile terminal, includes:
receiving operating information input by a user on the condition of receiving an automatic parking start instruction;
generating a parking control instruction according to the operating information; and
sending the parking control instruction to a vehicle for the vehicle to complete an automatic parking operation according to the parking control instruction.

An automatic parking method applied to a vehicle including an automatic parking system controller, includes:
receiving a preset operation input by a user through the automatic parking system controller;
acquiring gear information of the vehicle;
according to the preset operation and the gear information, generating an automatic parking start instruction and sending the automatic parking start instruction to a mobile terminal, so that the mobile terminal receives the operating information input by the user on the condition of receiving the automatic parking start instruction, generates a parking control instruction according to the operating information, and sends the parking control instruction to the vehicle; and
receiving the parking control instruction sent by the mobile terminal and completing an automatic parking operation according to the parking control instruction.

An automatic parking device applied to a mobile terminal, includes:
a first receiving module configured for receiving operating information input by a user on the condition of receiving an automatic parking start instruction;
a first generating module configured for generating a parking control instruction according to the operating information; and
a first sending module configured for sending the parking control instruction to a vehicle for the vehicle to complete an automatic parking operation according to the parking control instruction.

An automatic parking device applied to a vehicle including an automatic parking system controller, includes:
a third receiving module configured for receiving a preset operation input by a user through the automatic parking system controller;
an acquiring module configured for acquiring gear information of the vehicle;
a second sending module configured for, according to the preset operation and the gear information, generating an automatic parking start instruction and sending the automatic parking start instruction to a mobile terminal, so that the mobile terminal receives the operating information input by the user on the condition of receiving the automatic parking start instruction, generates a parking control instruction according to the operating information, and sends the parking control instruction to the vehicle; and
a fourth receiving module configured for receiving the parking control instruction sent by the mobile terminal and completing an automatic parking operation according to the parking control instruction.

An automatic parking system, includes: a mobile terminal and a vehicle including an automatic parking system controller, wherein the mobile terminal and the vehicle are communicatively connected;
the vehicle receives a preset operation input by a user through the automatic parking system controller;
the vehicle acquires gear information of the vehicle, and according to the preset operation and the gear information, generates an automatic parking start instruction and sends the automatic parking start instruction to the mobile terminal;
the mobile terminal receives the operating information input by the user on the condition of receiving the automatic parking start instruction, generates a parking control instruction according to the operating information, and sends the parking control instruction to the vehicle; and
the vehicle completes an automatic parking operation according to the parking control instruction.

Compared with the prior art, the automatic parking method, device and system according to the present disclosure have the following advantages:
The automatic parking control method, device and system provided by the embodiments of the present disclosure include: receiving the operating information input by the user on the condition of receiving the automatic parking start instruction; generating the parking control instruction according to the operating information; and sending the parking control instruction to the vehicle for the vehicle to complete the automatic parking operation according to the parking control instruction. In the present disclosure, in the process of controlling the vehicle to automatically park, the mobile terminal converts the operating information with large data capacity input by the user in the mobile terminal into the parking control instruction with small data capacity, and only sends the parking control instruction to the automatic parking system controller of the vehicle for the vehicle to complete automatic parking. On one hand, a communication information capacity between the mobile terminal and the vehicle in the automatic parking process is reduced, and then the efficiency of the automatic parking process is improved. Meanwhile, it is beneficial to expanding other functions needing to utilize communication data resources meanwhile. On the other hand, a calculation amount of the automatic parking system controller is reduced; moreover, it is convenient to support the user to customize the operating information and improve the user experience.

The above description is merely a summary of the technical solutions of the present disclosure. In order to more clearly know the technical means of the present disclosure to enable the implementation according to the contents of the description, and in order to make the above and other objects, features and advantages of the present disclosure more apparent and understandable, the particular embodiments of the present disclosure are provided below.

### BRIEF DESCRIPTION OF THE DRAWINGS

In order to more clearly illustrate the technical solutions of the embodiments of the present disclosure or the prior art, the drawings that are required to describe the embodiments or the prior art will be briefly introduced below. Apparently, the drawings that are described below are embodiments of the present disclosure, and a person skilled in the art may obtain other drawings according to these drawings without paying creative work.

Drawings constituting a part of the present disclosure here serve to provide a further understanding of the present disclosure, and the illustrative embodiments of the present disclosure and together with the description thereof serve to explain the present disclosure, and do not constitute inappropriate restriction to the present disclosure. In the drawings:
FIG. 1 is a flow chart of steps of an automatic parking method according to an embodiment of the present disclosure;
FIG. 2 is a brief architecture diagram of an automatic parking system according to an embodiment of the present disclosure;
FIG. 3 is a diagram of a parking-out display interface of a mobile terminal according to the embodiment of the present disclosure;
FIG. 4 is a flow chart of steps of another automatic parking method according to an embodiment of the present disclosure;
FIG. 5 is a flow chart of interactive steps of an automatic parking method according to an embodiment of the present disclosure;
FIG. 6 is a diagram of a valid parking place display interface according to the embodiment of the present disclosure;
FIG. 7 is a diagram of a display interface of a mobile APP according to the embodiment of the present disclosure;
FIG. 8 is a diagram of another display interface of the mobile APP according to the embodiment of the present disclosure;
FIG. 9 is a diagram of another display interface of the mobile APP according to the embodiment of the present disclosure;
FIG. 10 is a diagram of another display interface of the mobile APP according to the embodiment of the present disclosure;
FIG. 11 is a diagram of another display interface of the mobile APP according to the embodiment of the present disclosure;
FIG. 12 is a flow chart of interactive steps of another remote parking method according to an embodiment of the present disclosure;
FIG. 13 is a schematic diagram showing operation of a remote parking-out method according to an embodiment of the present disclosure;
FIG. 14 is a structural block diagram of an automatic parking device according to an embodiment of the present disclosure;
FIG. 15 is a structural block diagram of another automatic parking device according to an embodiment of the present disclosure;
FIG. 16 schematically shows a block diagram of a computing-processing device for executing the method according to the present disclosure; and
FIG. 17 schematically shows a storage unit for holding or carrying a program code for implementing the method according to the present disclosure.

### DETAILED DESCRIPTION OF THE EMBODIMENTS

In order to make the objects, the technical solutions and the advantages of the embodiments of the present disclosure clearer, the technical solutions of the embodiments of the present disclosure will be clearly and completely described below with reference to the drawings of the embodiments of the present disclosure. Apparently, the described embodiments are merely certain embodiments of the present disclosure, rather than all of the embodiments. All of the other embodiments that a person skilled in the art obtains on the basis of the embodiments of the present disclosure without paying creative work fall in the protection scope of the present disclosure.

It should be noted that, in case of no conflict, the embodiments in the present disclosure and the features in the embodiments may be combined with each other.

The present invention will be explained in detail with reference to the accompanying drawings and embodiments hereinafter.

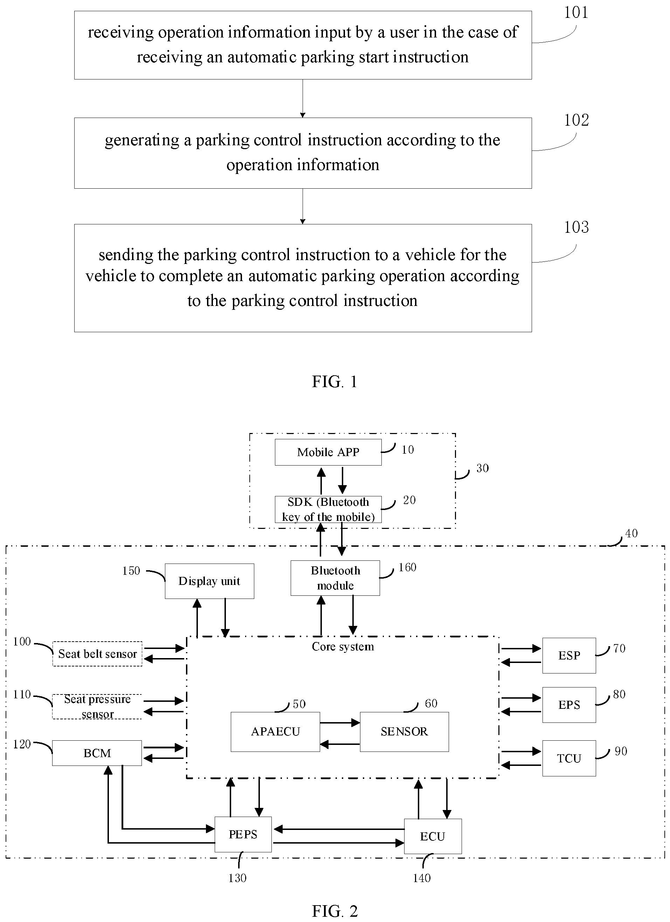

Refer to FIG. 1, which illustrates a flow chart of steps of an automatic parking method according to an embodiment of the present disclosure.

The automatic parking method provided by the embodiment of the present disclosure is applied to a mobile terminal.

Step 101: when an automatic parking start instruction is received, receiving operating information input by a user.

In this step, if the automatic parking start instruction is received, the mobile terminal starts to receive operating information input by the user in the mobile terminal.

The automatic parking start instruction may include any one of an automatic parking-in start instruction and an automatic parking-out start instruction. If the automatic parking start instruction is an automatic parking-in start instruction, the mobile terminal starts to receive the operating information input by the user in the mobile terminal, wherein the operating information is operation behavior information of the user for automatically parking in the vehicle; if the automatic parking-out start instruction is an automatic parking-out start instruction, the mobile terminal starts to receive the operating information input by the user in the mobile terminal, wherein the operating information is operation behavior information of the user for automatically parking out the vehicle.

Specifically, referring to FIG. 2, which illustrates a brief architecture diagram of an automatic parking system according to an embodiment of the present disclosure. An automatic parking-in start instruction may be an automatic parking-in start instruction generated by an automatic parking system controller 50 (Auto Parking Assist Electronic Control Unit, APA ECU) on a vehicle after receiving a preset operation input by a user and acquiring gear information of the vehicle. The APA ECU 50 sends the generated automatic parking-in start instruction to a mobile terminal. The mobile terminal may be a mobile installed with automatic parking mobile software 10 (Application, APP) for the mobile terminal to start receiving operating information input by the user for automatically parking in the vehicle after receiving the automatic parking start instruction. The mobile APP 10 is configured for determining the operating information of the user, providing a determined result, that is, the parking control instruction, to the APA ECU 50 of the vehicle, and displaying current parking information of the vehicle.

In the embodiment of the present disclosure, an automatic parking-in assist button or switch may be provided on a dashboard or a multimedia display screen of the vehicle. The preset operation input by the user may be an operation of pressing the automatic parking-in assist button or switch when the user wants to park in the vehicle automatically, or a voice control operation of starting automatically parking in the vehicle input by the user through a voice collection module in the vehicle. Further, the APA ECU 50 may obtain information of whether the user performs the preset operation through a vehicle network.

Meanwhile, after acquiring that the user inputs the preset operation above, the APA ECU 50 may further acquire the gear information of the vehicle from a Transmission Control Unit 90 (TCU) of the vehicle through the vehicle network, and if the vehicle is in a forward gear or a neutral gear at this time, the APA ECU 50 generates an automatic parking-in start instruction.

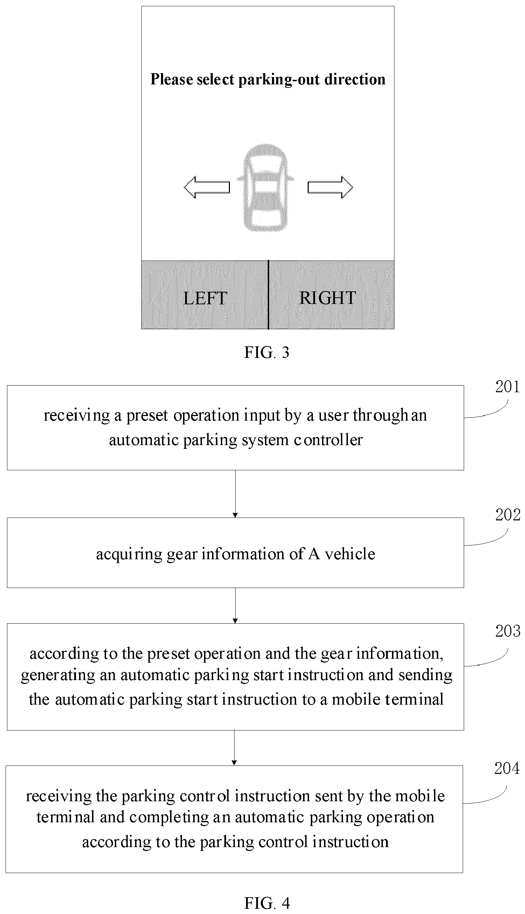

Specifically, the mobile APP 10 may be provided with an automatic parking-out option. Therefore, the automatic parking-out start instruction may be that when the user wants to park out the vehicle automatically, the mobile APP 10 sends the selection operating information of the user to the APA ECU 50 after selecting automatic parking-out through the mobile APP 10; or, the dashboard of the vehicle may be provided with an automatic parking-out assist button or switch. When the user wants to park out the vehicle automatically, the APA ECU 50 may acquire the information of whether the user performs the above operation or not through the vehicle network by pressing the automatic parking-out assist button or switch. Furthermore, after acquiring the operating information that the user wants to park out the vehicle automatically, the APA ECU 50 first performs self-inspection on the vehicle, and acquires environmental information of the vehicle from a vehicle sensor 60(SENSOR) when it is detected that there is no fault in the APA ECU 50 system and an associated system of the vehicle. The SENSOR 60 may include a vehicle radar sensor for detecting obstacles around the vehicle, and an on-vehicle camera for detecting a surrounding environment of the vehicle, generating parking-out direction information of the vehicle according to the environmental information and sending the parking-out direction information to the mobile APP 10. The mobile APP 10 receives and displays the parking-out direction information in a display screen of the mobile APP 10. Refer to FIG. 3, which illustrates a parking-out display interface of the mobile terminal according to the embodiment of the present disclosure. The parking-out direction information is a plurality of directions in which the vehicle may be parked out smoothly calculated by the APA ECU 50 according to the current environmental information of the vehicle. After receiving the selection operating information of the user for the parking-out direction information on the display screen, the mobile APP 10 generates a target parking-out direction and an automatic parking-out start instruction, and meanwhile, starts to receive the operating information input by the user for the automatic parking-out process of the vehicle.

It should be noted that the communication connection between the mobile terminal and the vehicle enables information transmission between the mobile terminal and the vehicle, and information transmission between the APA ECU and each related system in the vehicle may be completed through the whole vehicle network.

In the embodiment of the present disclosure, referring to FIG. 2, communication connection and information transmission may be performed between the mobile terminal 30 and the vehicle 40 through Bluetooth. Specifically, the mobile terminal 30 may include the mobile APP 10 and a Software Development Kit 20 (SDK). The SDK 20 and a Bluetooth module 160 of the vehicle constitute a Bluetooth key for providing an interface for information interaction between the mobile APP 10 and the Bluetooth module 160 of the vehicle and performing secure encryption of communication. The vehicle 40 is provided with the Bluetooth module 160, so an information transmission process between the mobile terminal and the vehicle is specifically as follows: the mobile APP 10 retransmits information to be transmitted to the Bluetooth module 160 on the vehicle 40 through the SDK 20, and then the Bluetooth module 160 sends the information to the APA ECU 50 through the whole vehicle network. Since the APA ECU 50 and various associated systems in the vehicle may transmit information through the whole vehicle network, two-way communication of data between the mobile APP 10 and various associated systems in the vehicle may be completed.

In the embodiment of the present disclosure, various associated systems of the vehicle may include:
(1) an Electronic Stability Program 70 (ESP) configured for feeding back driving distance information of the vehicle and perform braking;
(2) an Electric Power Steering 80 (EPS) configured for feeding back angle information of a steering wheel and rotating the steering wheel;
(3) a Transmission Control Unit 90 (TCU) configured for feeding back current gear information and switching a target gear;
(4) a seat belt sensor 100 and a seat pressure sensor 110 configured for feeding back current state information of personnel in the vehicle and providing information feedback for determining an intention of the personnel;
(5) a Body Control Unit 120 (BCM) configured for feeding back a door state, controlling a door lock, and performing state interaction with PEPS;
(6) a Passive Entrance Passive Start 130 (PEPS) configured for switching management of a power supply system, performing ignition start control of an engine and anti-theft control, and receiving and executing key instructions; and
(7) an Electronic Control Unit (ECU) configured for feeding back an engine state, controlling a door lock, shutting down the engine and performing state interaction with PEPS.

It should be noted that the APA ECU 50 is provided with an image recognition algorithm, which is configured for screening and calculating driving of the SENSOR 60 and collected information to confirm the environmental information around the vehicle 40; configured for determining and executing a system function logic, which comprises confirming the gear information of the TCU 90 and outputting the target gear information; determining current corner information of the EPS 80 and outputting instruction information of a target corner; calculating wheel speed pulse information output by the ESP 70 to determine a difference between a driving distance of the vehicle 40 and a target value, and requesting the ESP 70 to perform brake control when the driving distance is consistent with the target value; collecting a vehicle power mode output by the PEPS 120 and engine state information sent by the ECU 140, and meanwhile, giving instructions of a target mode and state information to the power mode and the engine state; collecting the information such as the door state output by the BCM 120 and sending unlocking/locking instructions; collecting the information of the seat belt sensor 100 and the seat pressure sensor 110 as a determining basis for executing functions; and storing and memorizing learned route map information.

Step 102: generating a parking control instruction according to the operating information.

In this step, after receiving the automatic parking start instruction, the mobile terminal receives the operating information of the user terminal for the automatic parking process, identifies an intention of the user according to the operating information and the preset rule, and converts the operating information input by the user into the parking control instruction.

Optionally, the operating information may include any one of gesture operating information, pressing operating information and sound control information of the user for the display screen of the mobile terminal and shaking operating information for the mobile terminal.

Optionally, selection options of the operating information and preset operation tracks corresponding to the operating information are preset in the mobile terminal, and the selection options include a gesture operation option, a pressing operation option, a sound control option and a shaking operation option. The user may independently select the operating information that the user needs to input into the mobile terminal in the automatic parking process by the selection option, and further, the user may customize and set the preset operation track corresponding to the operating information, which is convenient to support the user to customize the operating information.

In the embodiment of the present disclosure, after the user enables the automatic parking process, the mobile terminal needs to collect the operating information of the user, thus determining whether the user continuously monitors the automatic parking process, and receives intervention of the user on the automatic parking process and corresponding instructions.

For example, when the operating information is the gesture operating information of the user for the display screen of the mobile terminal, the mobile terminal may obtain the gesture operating information of the user on the display screen of the mobile terminal by detecting a contact coordinate and a contact pressure of a finger of the user contact with the display screen of the mobile terminal, and determine the intention of the user corresponding to the gesture operating information based on a certain preset rule, generate a parking control instruction representing the intention of the user, and send the parking control instruction to the vehicle.

In the embodiment of the present disclosure, the preset rule is a corresponding relation between the gesture operating information and the parking control instruction, and the parking control instruction may include: information of continuing automatic parking and information of interrupting automatic parking. If the parking control instruction is information of continuing automatic parking, it is indicated that the mobile terminal detects that the user continuously inputs the same gesture operation as the preset operation track on the display screen of the mobile terminal, that is, in this case, the user continuously pays attention to the automatic parking process, and the user observes that there is no emergency for the vehicle that is carrying out automatic parking, for example, an obstacle that affects the parking process appears on the parking track of the vehicle, and the user wants to continue automatic parking. If the parking control instruction is information of interrupting automatic parking, it is indicated that the mobile terminal detects that the user does not continuously input the same gesture operation as the preset operation track on the display screen of the mobile terminal, that is, in this case, the user does not continuously pay attention to the automatic parking process due to some reasons, or the user observes that there is an emergency for the vehicle that is carrying out automatic parking, for example, an obstacle that affects the parking process appears on the parking track of the vehicle, and the user wants to interrupt automatic parking.

Step 103: sending the parking control instruction to the vehicle to enable the vehicle to complete an automatic parking operation according to the parking control instruction.

In this step, the mobile terminal sends the parking control instruction generated in step 102 to the vehicle, so that the APA ECU of the vehicle may directly determine instructions needed to be executed by various associated systems in the vehicle during the automatic parking process according to the parking control instruction, and send the instructions to the corresponding associated systems to enable various associated system to execute the instructions until the vehicle finally completes the automatic parking process.

Specifically, the mobile APP may send the parking control instruction to the Bluetooth module on the vehicle through a Bluetooth key SDK of the mobile, and the Bluetooth module then sends the parking control instruction to the APA ECU through the whole vehicle network. After receiving the parking control instruction, the APA ECU may directly determine each instruction needed to be executed by various associated systems in the vehicle during the automatic parking process according to the parking control instruction, and send each instruction to the corresponding various associated systems for various associated systems to execute the instructions until the vehicle finally completes the automatic parking process.

For example, if the parking control instruction received by the vehicle is information of continuing automatic parking, it is indicated that the user continuously pays attention to the automatic parking process, and the user observes that there is no emergency for the vehicle that is carrying out automatic parking, for example, an obstacle that affects the parking process appears on the parking track of the vehicle, and the user wants to continue automatic parking. Therefore, the APA ECU controls various associated systems in the vehicle to continue automatic parking after receiving the information of continuing automatic parking.

If the parking control instruction received by the vehicle is information of continuously interrupting automatic parking, it is indicated that the mobile terminal detects that the user does not continuously input the same gesture operation as the preset operation track on the display screen of the mobile terminal, that is, in this case, the user does not continuously pay attention to the automatic parking process due to some reasons, or the user observes that there is an emergency for the vehicle that is carrying out automatic parking, for example, an obstacle that affects the parking process appears on the parking track of the vehicle, and the user wants to interrupt automatic parking. Therefore, the APA ECU controls various associated systems in the vehicle to interrupt automatic parking after receiving the information of interrupting automatic parking. Specifically, the APA ECU generates a braking instruction and sends the instruction to the ESP for the ESP to execute the braking instruction to prevent the vehicle from colliding with the sudden obstacles in a parking range during the automatic parking. The APA ECU generates a steering wheel rotating stop instruction and sends the instruction to the EPS for the EPS to execute the instruction to stop the rotating of the steering wheel of the vehicle required by automatic parking. The APA ECU generates a gear shift instruction and sends the instruction to the TCU for the TCU to execute the instruction, so that the gear of the vehicle in the automatic parking process may be changed into a neutral gear or a parking gear.

In conclusion, the automatic parking method provided by the embodiment of the present disclosure is applied to the mobile terminal, including: receiving the operating information input by the user on the condition of receiving the automatic parking start instruction; generating the parking control instruction according to the operating information; and sending the parking control instruction to the vehicle for the vehicle to complete the automatic parking operation according to the parking control instruction. In the embodiment of the present disclosure, in the process of controlling the vehicle to automatically park, the mobile terminal converts the operating information with large data capacity input by the user in the mobile terminal into the parking control instruction with small data capacity, and only sends the parking control instruction to the automatic parking system controller of the vehicle for the vehicle to complete automatic parking. On one hand, a communication information capacity between the mobile terminal and the vehicle in the automatic parking process is reduced, and then the efficiency of the automatic parking process is improved. Meanwhile, it is beneficial to expand other functions needed to utilize communication data resources. On the other hand, a calculation amount of the automatic parking system controller is reduced; moreover, it is convenient to support the user to customize the operating information and improve the user experience.

Referring to FIG. 4, which illustrates a flow chart of steps of another automatic parking method according to an embodiment of the present disclosure.

The automatic parking method provided by the embodiment of the present disclosure is applied to a vehicle including an automatic parking system controller.

Step 201: receiving a preset operation input by a user through the automatic parking system controller.

In this step, the vehicle with an APA ECU may receive the preset operation input by the user through the APA ECU, so as to obtain an intention of the user needed to start automatic parking.

In the embodiment of the present disclosure, the preset operation input by the user may be an operation that the user selects the vehicle to perform automatic parking. For example, when an automatic parking-in assist button or switch is provided on a dashboard of the vehicle, the preset operation input by the user may be an operation of pressing the automatic parking-in assist button or switch when the user wants to park in the vehicle automatically. Further, the APA ECU may acquire information of whether the user performs the preset operation above through a vehicle network.

Moreover, when the dashboard of the vehicle is provided with the automatic parking-out assist button or switch, when the user wants to park out the vehicle automatically, the APA ECU may acquire the information of whether the user performs the above operation or not through the vehicle network by pressing the automatic parking-out assist button or switch.

Step 202: acquiring gear information of the vehicle.

In this step, the vehicle with the APA ECU may receive the gear information of the vehicle through the APA ECU.

Step 203: according to the preset operation and the gear information, generating an automatic parking start instruction and sending the automatic parking start instruction to a mobile terminal, so that the mobile terminal receives the operating information input by the user on the condition of receiving the automatic parking start instruction, generates a parking control instruction according to the operating information, and sends the parking control instruction to the vehicle.

In this step, the APA ECU analyzes an intention of the user corresponding to the preset operation and a current state of the vehicle according to the preset operation and gear information acquired, and generates the automatic parking start instruction.

In the embodiment of the present disclosure, if the preset operation is an operation of pressing the automatic parking-in assist button or switch, the gear information is that the current gear of the vehicle is a forward gear or neutral gear, it is indicated that the user wants to park in the vehicle automatically at this time, and the vehicle is in a normal driving state. Therefore, the automatic parking start instruction for automatically parking in the vehicle is generated. If the preset operation is an operation of pressing the automatic parking-out assist button or switch, the gear information is that the current gear of the vehicle is a parking gear, it is indicated that the user wants to park out the vehicle automatically at this time, and the vehicle is in a parking state. Therefore, the automatic parking start instruction for automatically parking out the vehicle is generated.

Further, the APA ECU sends the automatic parking start instruction generated to the mobile terminal for the mobile terminal, to enable the mobile terminal starts to receive the operating information input by the user for monitoring the automatic parking process, and the mobile terminal determines the parking control instruction of the user for the automatic parking process according to the operating information.

Step 204: receiving the parking control instruction sent by the mobile terminal and completing an automatic parking operation according to the parking control instruction.

In this step, the vehicle receives the parking control instruction sent by the mobile terminal through the APA ECU, and directly completes the automatic parking process according to the parking control instruction.

Specifically, after receiving the parking control instructions, the APA ECU may directly determine instructions needed to be executed by various associated systems in the vehicle during the automatic parking process according to the parking control instruction, and send the instructions to the corresponding various associated systems for various associated systems to execute the instructions until the vehicle finally completes the automatic parking process.

For example, if the parking control instruction received by the vehicle is information of continuing automatic parking, it is indicated that the user continuously pays attention to the automatic parking process, and the user observes that there is no emergency for the vehicle that is carrying out automatic parking, for example, an obstacle that affects the parking process appears on the parking track of the vehicle, and the user wants to continue automatic parking. Therefore, the APA ECU controls various associated systems in the vehicle to continue automatic parking after receiving the information of continuing automatic parking.

If the parking control instruction received by the vehicle is information of continuously interrupting automatic parking, it is indicated that the mobile terminal detects that the user does not continuously input the same gesture operation as the preset operation track on the display screen of the mobile terminal, that is, in this case, the user does not continuously pay attention to the automatic parking process due to some reasons, or the user observes that there is an emergency for the vehicle that is carrying out automatic parking, for example, an obstacle that affects the parking process appears on the parking track of the vehicle, and the user wants to interrupt automatic parking. Therefore, the APA ECU controls various associated systems in the vehicle to interrupt automatic parking after receiving the information of interrupting automatic parking. Specifically, the APA ECU generates a braking instruction and sends the instruction to the ESP for the ESP to execute the braking instruction to prevent the vehicle from colliding with the sudden obstacles in a parking range during the automatic parking. The APA ECU generates a steering wheel rotating stop instruction and sends the instruction to the EPS for the EPS to execute the instruction to stop the rotating of the steering wheel of the vehicle required by automatic parking. The APA ECU generates a gear shift instruction and sends the instruction to the TCU for the TCU to execute the instruction, so that the gear of the vehicle in the automatic parking process may be changed into a neutral gear or a parking gear.

In conclusion, the automatic parking method provided by the embodiment of the present disclosure is applied to the vehicle including the automatic parking system controller, including: receiving the preset operation input by the user through the automatic parking system controller; acquiring the gear information of the vehicle; according to the preset operation and the gear information, generating the automatic parking start instruction and sending the automatic parking start instruction to the mobile terminal; and receiving the parking control instruction sent by the mobile terminal and completing the automatic parking operation according to the parking control instruction. In the embodiment of the present disclosure, in the process of controlling the vehicle to automatically park, the mobile terminal converts the operating information with large data capacity input by the user in the mobile terminal into the parking control instruction with small data capacity, and only sends the parking control instruction to the automatic parking system controller of the vehicle for the vehicle to complete automatic parking. On one hand, a communication information capacity between the mobile terminal and the vehicle in the automatic parking process is reduced, and then the efficiency of the automatic parking process is improved. Meanwhile, it is beneficial to expanding other functions needed to utilize communication data resources. On the other hand, a calculation amount of the automatic parking system controller is reduced; moreover, it is convenient to support the user to customize the operating information and improve the user experience.

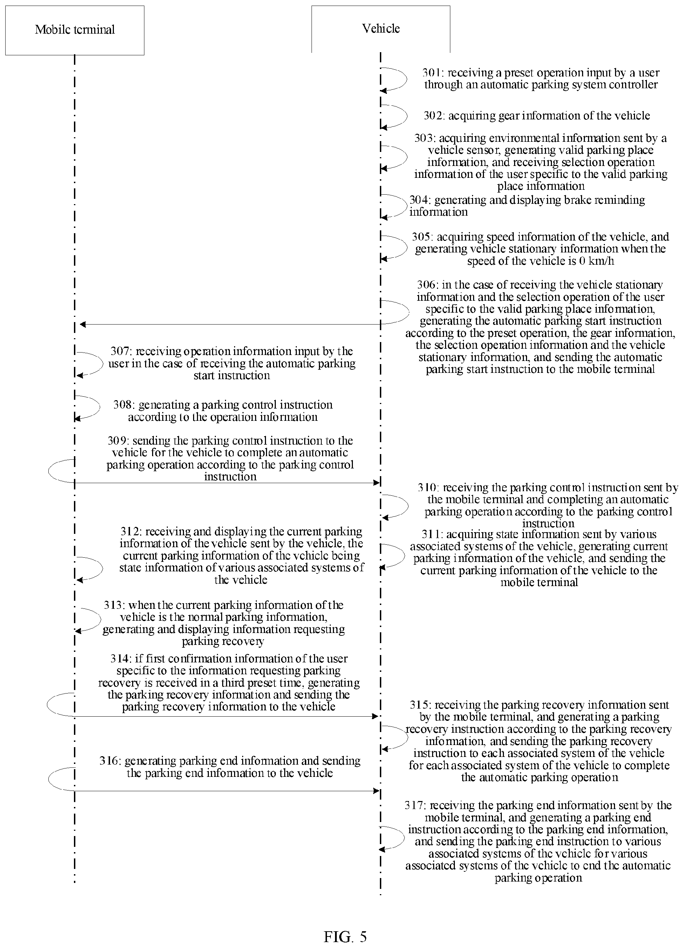

Referring to FIG. 5, which illustrates a flow chart of interactive steps of an automatic parking method according to an embodiment of the present disclosure.

The automatic parking method provided by the embodiment of the present disclosure is applied to an automatic parking system including a mobile terminal and a vehicle.

Step 301: receiving, by the vehicle, a preset operation input by a user through the automatic parking system controller.

For the step, reference may be specifically made to the step 201 above, and details are not described herein again.

Step 302: acquiring, by the vehicle, gear information of the vehicle.

For the step, reference may be specifically made to the step 202 above, and details are not described herein again.

Step 303: acquiring, by the vehicle, environmental information sent by a vehicle sensor, generating valid parking place information, and receiving selection operating information of the user for the valid parking place information.

After step 301, the vehicle may generate a vehicle environmental information feedback instruction after receiving the preset operation input by the user, and send the vehicle environmental information feedback instruction to a SENSOR installed on the vehicle through an APA ECU. The SENSOR may include a vehicle radar sensor for detecting obstacles around the vehicle and an on-vehicle camera for detecting a surrounding environment of the vehicle. After receiving the vehicle environmental information feedback instruction, the SENSOR feeds back environmental information of the vehicle collected by the vehicle radar sensor and the on-vehicle camera to the APA ECU, so that the APA ECU may, according to the environmental information of the vehicle, determine whether there is a valid space around the vehicle that is matched with a size of a valid parking spot without obstacles, and take the valid space determined as the valid parking spot information.

Preferably, the valid space may be a space with parking spot size, which may be determined according to specific vehicle model parameters, and the parking spot size may be 6 meters * 2.7 meters.

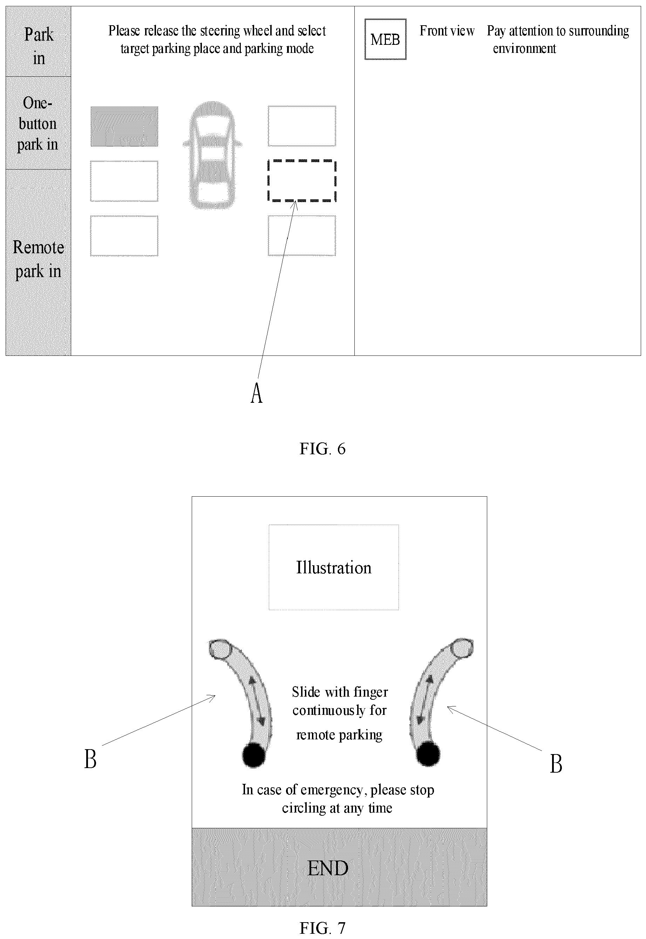

Further, referring to FIG. 2, the APA ECU 50 may send the valid parking spot information to a display unit 150 in the vehicle. After receiving the valid parking spot information, the display unit 150 may display the valid parking spot information in a display interface of the display unit 150, and set an option for the user to select a target parking spot on the display interface of the display unit. Referring to FIG. 6, which illustrates a diagram of a valid parking spot display interface provided by the embodiment of the present disclosure. In this diagram, A is the valid space that meets the parking spot size requirements, that is, a valid parking spot that may be used for automatic parking. The user may select the parking spot A in the interface shown in FIG. 6 and determine the parking spot A as the parking spot for automatic parking.

In addition, after the user selects the valid parking spot information on the display interface of the display unit of the vehicle, the display unit of the vehicle sends the selection operating information of the user to the APA ECU.

Further, if the APA ECU receives the selection operating information, on one hand, it is indicated that a valid parking spot capable of automatic parking is detected in the surrounding environment of the vehicle, on the other hand, it is further indicated that the user determines to perform the automatic parking operation and actively selects the valid parking spot corresponding to automatic parking.

Optionally, referring to FIG. 6, the user may also select a "one-button park in" mode on the display interface of the display unit of the vehicle, so that the APA ECU of the vehicle controls various associated systems of the vehicle to perform one-button park in operation to park the vehicle in a parking spot default by the system.

Step 304: generating and displaying, by the vehicle, a brake reminding message.

In this step, if receiving the selection operating information of the user for the valid parking spot information, the vehicle generates a brake reminding message, and reminds the user to brake on the display interface where the vehicle is displayed or by voice, and stops the vehicle through a braking system of the vehicle to prepare for the automatic parking process.

Step 305: acquiring, by the vehicle, speed information of the vehicle, and generating vehicle stationary information when the speed of the vehicle is 0 km/h.

After step 303, the vehicle may generate a vehicle speed information feedback instruction, and send the vehicle speed information feedback instruction to an ESP system installed on the vehicle through the APA ECU. After acquiring the current speed of the vehicle, the ESP system feeds back the vehicle speed information to the APA ECU, and then the APA ECU generates the vehicle stationary information when the speed of the vehicle is 0 km/h.

Step 306: on the condition of receiving the vehicle stationary information and the selection operation of the user for the valid parking spot information, generating, by the vehicle, the automatic parking start instruction according to the preset operation, the gear information, the selection operating information and the vehicle stationary information, and sending the automatic parking start instruction to the mobile terminal.

In this step, if the vehicle receives the vehicle stationary information, it means that the vehicle is in a stationary state in this case; if the vehicle receives the selection operation of the user for the valid parking spot information, it means that the user actively selects the valid parking spot corresponding to automatic parking, i.e., in this case, the user wants the vehicle to perform the automatic parking process, and the surrounding environment of the vehicle also meets automatic parking conditions, so that the vehicle may generate the automatic parking start instruction and send the instruction to the mobile terminal for the mobile terminal to start receiving the operating information input by the user.

In this step, the APA ECU analyzes an intention of the user corresponding to the preset operation and a current state of the vehicle according to the preset operation, gear information, selection operating information and vehicle stationary information acquired, and generates the automatic parking start instruction.

In the embodiment of the present disclosure, if the preset operation is an operation that an automatic parking-in assist button or switch is pressed, and the gear information is that the current gear of the vehicle is a forward gear or a neutral gear, and the selection operating information and the vehicle stationary information are received, it means that the user wants the vehicle to automatically park at the time, and change from a normal driving state to the stationary state after the vehicle is braked. Meanwhile, there are valid parking spots for automatic parking in the surrounding environment of the vehicle, and the user actively selects the valid parking spot corresponding to automatic parking, that is, the user wants the vehicle to automatically park at the time, and the surrounding environment of the vehicle also meets the automatic parking conditions. Therefore, the APA ECU generates an automatic parking start instruction for automatically parking out.

Step 307: receiving, by the mobile terminal, operating information input by the user on the condition of receiving the automatic parking start instruction.

In this step, the operating information may include: any one of gesture operating information, pressing operating information and sound control information of the user for the display screen of the mobile terminal and shaking operating information for the mobile terminal. In the embodiment of the present disclosure, the object for the mobile terminal to receive the operating information input by the user is to enable the mobile terminal to determine whether the user continuously monitors the automatic parking process according to the operating information, and receive intervention of the user on the automatic parking process and corresponding instructions.

Step 308: generating, by the mobile terminal, a parking control instruction according to the operating information.

Optionally, in an implementation of the embodiment of the present disclosure, step 308 may specifically include:
substep 3081: in the process of receiving the operating information, at every first preset time, converting, by the mobile terminal, a part of the operating information received in each of the first preset time into the parking control instruction according to a preset rule.

In this step, the mobile terminal starts to receive the operating information input by the user, and at every first preset time, converts a part of the operating information received in the first preset time into the parking control instruction according to the preset rule.

Optionally, the preset rule may include: when the operating information is matched with a first preset operation, and a time when the operating information is matched with the first preset operation is greater than or equal to a second preset time, the parking control instruction generated being information of continuing automatic parking; and when the operating information is not matched with the first preset operation, or the time when the operating information is matched with the first preset operation is less than the second preset time, the parking control instruction generated is information of interrupting automatic parking.

Specifically, a preset pattern may be displayed on a display interface of a mobile APP in the mobile terminal. A gesture operation of the user by sliding a finger along the preset pattern on the display interface is the first preset operation. Referring to FIG. 7, which illustrates a diagram of the display interface of the mobile APP provided by the embodiment of the disclosure. As shown in FIG. 7, the first preset operation is a gesture operation of the user by sliding a finger along a graph B, and the graph B is the preset pattern.

Preferably, the preset pattern may be set by the user according to practical situations.

Preferably, the first preset time may be a fixed time value, such as 0.2 second and 0.4 second.

Preferably, the second preset time may also be a fixed time value, such as 0.1 second and 0.2 second.

Specifically, if the preset pattern is the graph B, the first preset time is 1 second, and the second preset time is 0.8 second, the specific process of generating the parking control instruction by the mobile terminal according to the operating information may be as follows: the mobile terminal receives the operating information input by the user in the display interface of the mobile APP, and at every one second, compares the operating information received in one second with the figure B; if a time that the operating information is matched with a shape of the figure B exceeds 0.8 second in one second, it means that the user is continuously sliding his finger according to the figure B on the display interface of the mobile APP, that is, the user is continuously monitoring the automatic parking process of the vehicle through the mobile APP. In this case, the parking control instruction generated by the mobile terminal according to the operating information input by the user is information of continuing automatic parking. After the mobile terminal sends the information of continuing automatic parking to the vehicle, the vehicle executes the operation of continuing automatic parking.

If the operating information is not matched with the shape of the figure B or the time that the operating information is matched with the shape of the figure B is less than 0.8 second in one second, it means that the user does not continuously slide his finger according to the figure B on the display interface of the mobile APP, that is, the user does not continuously monitor the automatic parking process of the vehicle through the mobile APP, or in the automatic parking process of the vehicle, the user stops sliding his finger on the display interface of the mobile APP as an emergency situation that affects the automatic parking of the vehicle is observed. In this case, the parking control instruction generated by the mobile terminal according to the operating information input by the user is information of interrupting automatic parking. After the mobile terminal sends the information of interrupting automatic parking to the vehicle, the vehicle executes the operation of interrupting automatic parking.

Optionally, in another implementation of the embodiment of the present disclosure, step 308 may specifically include:
substep 3082: after receiving the complete operating information, converting, by the mobile terminal, the received operating information into the parking control instruction according to a preset rule.

In this step, the mobile terminal starts to receive the operating information input by the user, and in the process of receiving the operating information, the mobile terminal, after detecting that the complete operating information is received, converts the operating information received into the parking control instruction according to the preset rule.

Optionally, the preset rule may include: when the operating information is matched with a first preset operation, and a time when the operating information is matched with the first preset operation is greater than or equal to a second preset time, the parking control instruction generated is information of continuing automatic parking; and when the operating information is not matched with the first preset operation, or the time when the operating information is matched with the first preset operation is less than the second preset time, the parking control instruction generated is information of interrupting automatic parking.

Specifically, a preset pattern may be displayed on a display interface of a mobile APP in the mobile terminal. A gesture operation of the user by sliding a finger along the preset pattern on the display interface is the first preset operation. As shown in FIG. 7, the first preset operation is a gesture operation of the user by sliding a finger along a graph B, and the graph B is the preset pattern.

Specifically, if the preset pattern is the graph B, and the second preset time is 0.8 second, the specific process of generating the parking control instruction by the mobile terminal according to the operating information may be as follows: the mobile terminal receives the operating information input by the user in the display interface of the mobile APP, and after detecting that the complete operating information is received, i.e., detecting that the finger of the user touches the display interface of the mobile APP until the finger of the user leaves the display interface of the mobile APP, compares the complete operating information received with the figure B; if a time that the operating information is matched with a shape of the figure B exceeds 0.8 second, it means that the user is continuously sliding his finger according to the figure B on the display interface of the mobile APP, that is, the user is continuously monitoring the automatic parking process of the vehicle through the mobile APP. In this case, the parking control instruction generated by the mobile terminal according to the operating information input by the user is information of continuing automatic parking. After the mobile terminal sends the information of continuing automatic parking to the vehicle, the vehicle executes the operation of continuing automatic parking.

If the operating information is not matched with the shape of the figure B or the time that the operating information is matched with the shape of the figure B is less than 0.8 second, it means that the user does not continuously slide his finger according to the figure B on the display interface of the mobile APP, that is, the user does not continuously monitor the automatic parking process of the vehicle through the mobile APP, or the automatic parking process of the vehicle, the user stops sliding his finger on the display interface of the mobile APP as an emergency situation that affects the automatic parking of the vehicle is observed. In this case, the parking control instruction generated by the mobile terminal according to the operating information input by the user is information of interrupting automatic parking. After the mobile terminal sends the information of interrupting automatic parking to the vehicle, the vehicle executes the operation of interrupting automatic parking.

Optionally, substep 3082 may specifically include:
Substep 30821: after the complete operating information is received, and when a throughput of a communication channel between the mobile terminal and the vehicle is less than a throughput threshold, converting the received operating information into the parking control instruction according to the preset rule.

In this step, if the throughput is less than the throughput threshold, it is indicated that a communication ability between the mobile terminal and the vehicle is poor. Therefore, if the interval is short, sending the parking control instruction generated according to the operating information may cause blockage of the communication channel between the mobile terminal and the vehicle. Therefore, it is selected to send the parking control instruction generated according to the operating information to the vehicle after the complete operating information is received, thus reducing a data volume transmitted between the mobile terminal and the vehicle, thereby improving the efficiency of the entire automatic parking process.

Optionally, the operating information includes: any one of gesture operating information, pressing operating information and sound control information for a display screen of the mobile terminal and shaking operating information for the mobile terminal.

Optionally, when the operating information is the gesture operating information for the display screen of the mobile terminal and the preset operation track is a preset gesture operation track, step 308 may specifically include:
substep 3083: displaying, by the mobile terminal, the preset gesture operation track and a prompt message on the display screen of the mobile terminal, the prompt message is configured for prompting the user to input the operating information.

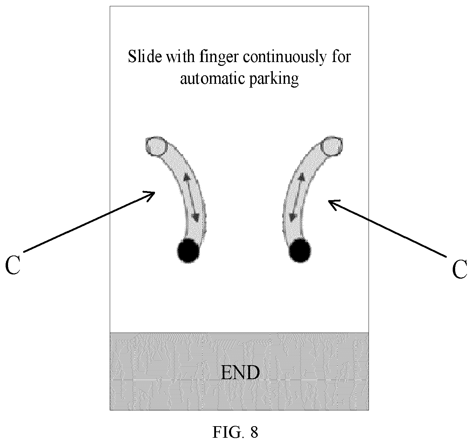

In this step, referring to FIG. 8, which illustrates a diagram of another display interface of the mobile APP provided by the embodiment of the present disclosure. A preset gesture operation track C and a prompt message "slide with finger continuously for automatic parking" for prompting the user to input the operating information are displayed on the display interface of the mobile APP in the mobile terminal.
substep 3084: when the operating information is received and the operating information is matched with the preset gesture operation track, generating, by the mobile terminal, the parking control instruction according to the present rule which is information of continuing automatic parking.

In this step, the operating information may be the gesture operating information for the display screen of the mobile terminal, and the operating information is compared with the preset gesture operation track. If the operating information is matched with the preset gesture operation track, and the time when the operating information is matched with the first preset operation is greater than or equal to the second preset time, the parking control instruction generated is information of continuing automatic parking, which indicates that the user is continuously sliding his finger on the display interface of the mobile APP according to the preset gesture operation track, i.e., indicating that the user is continuously monitoring the automatic parking process of the vehicle through the mobile APP. In this case, the parking control instruction generated by the mobile terminal according to the operating information input by the user is information of continuing automatic parking. After the mobile terminal sends the information of continuing automatic parking to the vehicle, the vehicle executes the operation of continuing automatic parking.
substep 3085: when the operating information is received and the operating information is not matched with the preset gesture operation track, generating, by the mobile terminal, the parking control instruction according to the present rule being information of interrupting automatic parking.

In this step, the operating information may be the gesture operating information for the display screen of the mobile terminal, and the operating information is compared with the preset gesture operation track. If the operating information is not matched with the preset gesture operation track, the parking control instruction generated is information of interrupting automatic parking, which indicates that the user does not continuously slide his finger on the display interface of the mobile APP according to the preset gesture operation track, i.e., indicating that the user does not continuously monitor the automatic parking process of the vehicle through the mobile APP. In this case, the parking control instruction generated by the mobile terminal according to the operating information input by the user is information of interrupting automatic parking. After the mobile terminal sends the information of interrupting automatic parking to the vehicle, the vehicle executes the operation of interrupting automatic parking.

Step 309: sending, by the mobile, the parking control instruction to the vehicle for the vehicle to complete an automatic parking operation according to the parking control instruction.

For the step, reference may be specifically made to the step 103 above, and details are not described herein again.

Step 310: receiving, by the vehicle, the parking control instruction sent by the mobile terminal and completing an automatic parking operation according to the parking control instruction.

For the step, reference may be specifically made to the step 204 above, and details are not described herein again.

Step 311: acquiring, by the vehicle, state information sent by various associated systems of the vehicle, generating current parking information of the vehicle, and sending the current parking information of the vehicle to the mobile terminal.

When the vehicle is performing automatic parking, the vehicle may acquire the state information sent by various associated systems of the vehicle through the APA ECU, generate the current parking information of the vehicle according to the state information sent by various associated systems of the vehicle, and send the current parking information of the vehicle to the mobile terminal.

In the embodiment of the present disclosure, the APA ECU may acquire a door state through a BCM, display "door opened" on the display interface of the mobile APP if it is detected that the door is open, and the generated current parking information of the vehicle is recoverable parking-interrupted information; and display "door opened" on the display interface of the mobile APP if it is detected that a back door of the vehicle is open, and the current parking information of the vehicle generated is recoverable parking-interrupted information. The APA ECU may acquire the environment information around the vehicle through the SENSOR, and display "obstacle detected" on the display interface of the mobile APP if it is detected that there is an obstacle around the vehicle, and the current parking information of the vehicle generated is recoverable parking-interrupted information. The APA ECU may acquire a distance between the vehicle and the mobile terminal through a Bluetooth module, and display "Bluetooth key exceeds safe distance" on the display interface of the mobile APP if it is detected that the distance between the vehicle and the mobile terminal exceeds the safe distance, and the current parking information of the vehicle generated is recoverable parking-interrupted information. The APA ECU may acquire whether the finger of the user keeps sliding on the display interface of the mobile APP through the Bluetooth module, and display "The driver stops sliding operation" on the display interface of the mobile APP if it is detected that the finger of the user stops sliding on the display interface of the mobile APP, and the current parking information of the vehicle generated is recoverable parking-interrupted information.

Step 312: receiving and displaying, by the mobile terminal, the current parking information of the vehicle sent by the vehicle, the current parking information of the vehicle being state information of various associated systems of the vehicle.

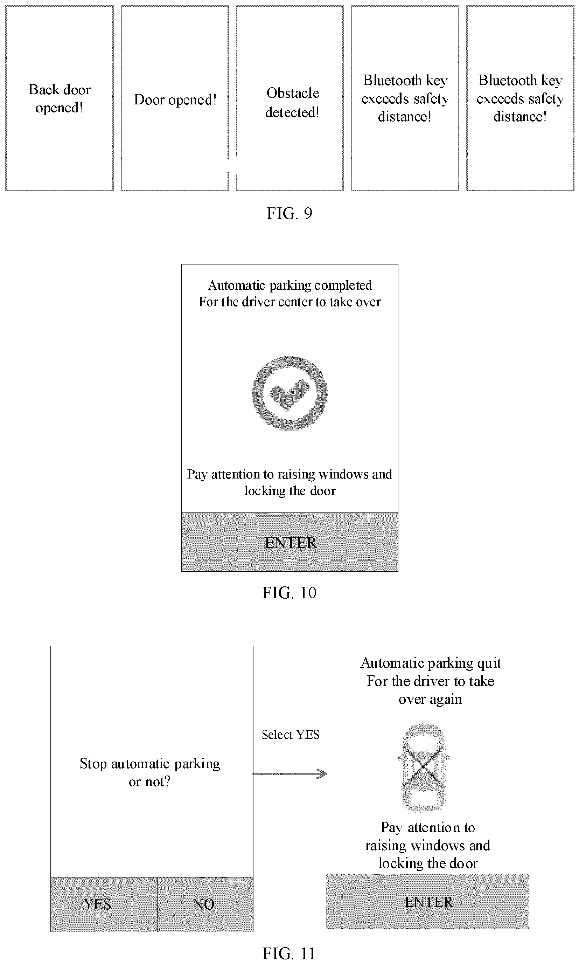

Refer to FIG. 9, which illustrates a diagram of another display interface of the mobile APP provided by the embodiment of the present disclosure. After receiving the current parking information of the vehicle, the mobile terminal displays the current parking information on the display interface of the mobile APP in the mobile terminal.

Optionally, the current parking information of the vehicle includes any one of normal parking information, recoverable parking-interrupted information and unrecoverable parking-interrupted information.

In the embodiment of the present disclosure, the normal parking information may include: a current speed of the vehicle, a parking track of the vehicle, a completion progress of the vehicle and other information; the recoverable parking-interrupted information may include: door opened, Bluetooth key exceeds safe distance, the driver stops sliding operation, obstacles affecting parking detected, and other information; and the unrecoverable parking-interrupted information may include: Associated system failure, steering wheel/shift lever/handbrake interfered by an external force, parking times exceeding first preset times, vehicle speed exceeding a preset speed, parking time exceeding a fourth preset time value, recoverable interrupting times exceeding second preset times, interrupted parking time exceeding fifth preset time value, communication connection between the vehicle and the mobile terminal interrupted and rearview mirror of the vehicle folded, and other information.

Preferably, the first preset times may be 10 times.

Preferably, the preset speed may be 7 km/h.

Preferably, the fourth preset time value may be 4 minutes.

Preferably, the second preset times may be 4 times.

Preferably, the fifth preset time value may be 30 minutes.

Optionally, when the current parking information of the vehicle is the recoverable parking-interrupted information, the method further includes:
Step 313: when the current parking information of the vehicle is the normal parking information, generating and displaying, by the mobile terminal, information requesting parking recovery.

In this step, the current parking information of the vehicle is recoverable parking-interrupted information, that is, the automatic parking process of the vehicle is in a recoverable interrupted state in this case. If the automatic parking process is interrupted due to the detection of obstacles that affect the automatic parking of the vehicle, when it is detected that the obstacles are released, that is, the current parking information of the vehicle is changed to the normal parking information, the mobile terminal may generate the information requesting parking recovery and display the information requesting parking recovery on the display interface of the mobile APP in this case.

Step 314: if first confirmation information of the user for the information requesting parking recovery is received in a third preset time, generating, by the mobile terminal, the parking recovery information and sending the parking recovery information to the vehicle.

In this step, the information requesting parking recovery is displayed on the display interface of the mobile APP. If the first confirmation information of the user for the information requesting parking recovery is received in the third preset time, the parking recovery information is generated, and the parking recovery information is sent to the vehicle.

Step 315: receiving, by the vehicle, the parking recovery information sent by the mobile terminal, and generating a parking recovery instruction according to the parking recovery information, and sending the parking recovery instruction to each associated system of the vehicle for each associated system of the vehicle to complete the automatic parking operation.

In this step, the vehicle receives the parking recovery information sent by the mobile terminal through the APA ECU, which indicates that the user confirms to recover the automatic parking process. Therefore, the APA ECU generates the parking recovery instruction and sends the parking recovery instruction to various associated systems of the vehicle. After receiving the parking recovery instruction, various associated systems of the vehicle continue to perform the automatic parking operation according to the parking recovery instruction until the automatic parking process is completed.

Optionally, refer to FIG. 10, which illustrates a diagram of another display interface of the mobile APP provided by the embodiment of the present disclosure. After the automatic parking process is completed, the mobile terminal may display a message on the display interface of the mobile APP that the automatic parking is completed, to remind the user that the automatic parking is completed.

Optionally, refer to FIG. 11, which illustrates a diagram of another display interface of the mobile APP provided by the embodiment of the present disclosure. In the automatic parking process, the user may also end the automatic parking process in the mobile APP. As shown in FIG. 11, after the user selects and confirms to end automatic parking, the mobile terminal may send an automatic parking suspension signal to the vehicle, and the APA ECU and various associated systems of the vehicle suspend the automatic parking operation and wait for subsequent signals. The mobile APP may confirm to end parking for the second time. If the user continues to choose to end automatic parking, the vehicle may end the automatic parking operation. If the user chooses to continue automatic parking, the vehicle may continue the automatic parking operation.

Optionally, when the current parking information of the vehicle is the unrecoverable parking-interrupted information,
the method further includes:
Step 316: generating parking end information by the mobile terminal, and sending the parking end information to the vehicle.

In this step, the current parking information of the vehicle is unrecoverable parking-interrupted information, that is, the automatic parking process of the vehicle is in an unrecoverable interrupted state in this case, so the mobile terminal generates the parking end information and sends the parking end information to the vehicle.

Step 317: receiving the parking end information sent by the mobile terminal by the vehicle, and generating a parking end instruction according to the parking end information, and sending the parking end instruction to various associated systems of the vehicle for various associated systems of the vehicle to end the automatic parking operation.

In this step, the vehicle receives the parking end information sent by the mobile terminal through the APA ECU. The vehicle generates the parking end instruction through the APA ECU, and sends the parking end instruction to various associated systems of the vehicle. After receiving the parking end instruction, various associated systems of the vehicle end the automatic parking process according to the parking end instruction.

In conclusion, the automatic parking method provided by the embodiment of the present disclosure is applied to the vehicle including the automatic parking system controller, including: receiving the preset operation input by the user through the automatic parking system controller; acquiring the gear information of the vehicle; according to the preset operation and the gear information, generating the automatic parking start instruction and sending the automatic parking start instruction to the mobile terminal; and receiving the parking control instruction sent by the mobile terminal and completing the automatic parking operation according to the parking control instruction. In the embodiment of the present disclosure, in the process of controlling the vehicle to automatically park, the mobile terminal converts the operating information with large data capacity input by the user in the mobile terminal into the parking control instruction with small data capacity, and only sends the parking control instruction to the automatic parking system controller of the vehicle for the vehicle to complete automatic parking. On one hand, a communication information capacity between the mobile terminal and the vehicle in the automatic parking process is reduced, and then the efficiency of the automatic parking process is improved. Meanwhile, it is beneficial to expand other functions needed to utilize communication data resources. On the other hand, a calculation amount of the automatic parking system controller is reduced; moreover, it is convenient to support the user to customize the operating information and improve the user experience.

On the basis of the foregoing embodiments, the embodiments of the present disclosure further provide an automatic parking method.

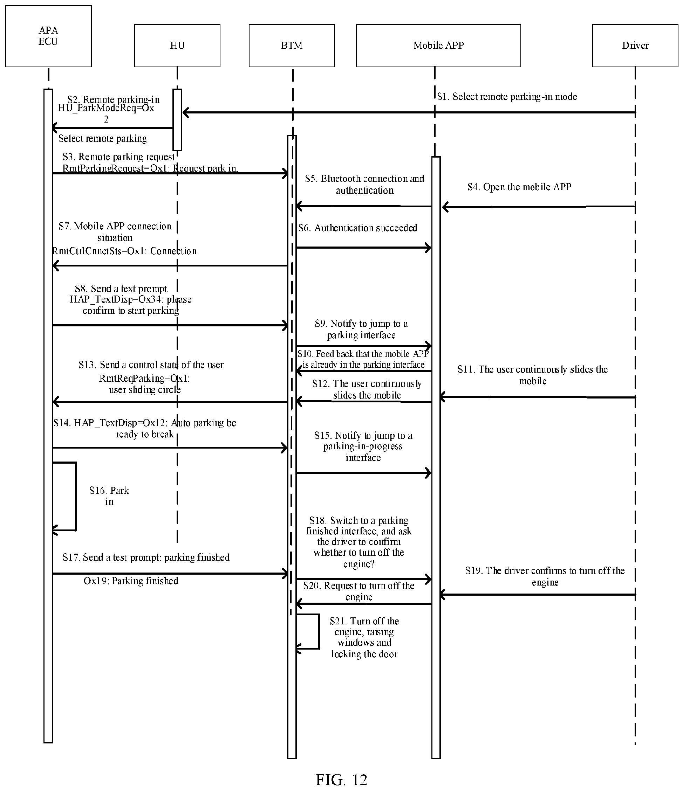

Referring to FIG. 12, which illustrates a flow chart of interactive steps of another remote parking method according to an embodiment of the present disclosure. The remote parking method is another way of automatic parking, which is applied to an application scene including a driver, a mobile APP, an on-vehicle Bluetooth Module (BTM), an on-vehicle host unit HU and an APA ECU. The method specifically includes:
S1. The driver selects a remote parking-in mode.

In this step, the driver selects the remote parking-in mode in the on-vehicle host unit HU, to control the vehicle to perform a remote parking-in process.

S2. The on-vehicle host unit HU sends a remote parking-in instruction to the APA ECU.

In this step, after detecting that the driver selects the remote parking-in mode, the on-vehicle host unit HU generates the remote parking-in instruction and sends the remote parking-in instruction to the APA ECU of the vehicle.

Specifically, the remote parking-in instruction is: HU_ParkModeReq=Ox2: Select remote parking.

S3. Remote parking request.

In this step, after receiving the remote parking-in instruction, the APA ECU generates the remote parking request and sends the remote parking request to the BTM.

Specifically, the remote parking request is: RmtParkingRequest=Ox1: Request park in.

S4. Opening the mobile APP.

In this step, the driver opens the mobile APP installed in the mobile terminal and configured for remote parking.

S5. Bluetooth connection and authentication.

In this step, the mobile APP performs Bluetooth connection and authentication to the BTM.

S6. Authentication succeeds.

In this step, the BTM authenticates a Bluetooth connection request sent by the mobile APP, and sends authentication succeeded information to the mobile APP, indicating that the Bluetooth connection between the mobile and the vehicle is successfully completed.

S7. Mobile APP connection situation.

In this step, after authenticating the Bluetooth connection request sent by the mobile APP, the BTM sends the connection situation between the mobile APP and the BTM to the APA ECU. Specifically, information sent by the BTM is: RmtCtrlCnnctSts=Ox1: Connection.

S8. Sending a text prompt.

In this step, after receiving the connection situation of the mobile APP, the APA ECU generates a text prompt requesting confirmation to start remote parking, and sends the text prompt to the BTM.

Specifically, the text prompt requesting confirmation to start remote parking is: HAP_TextDisp=Ox34: please confirm to start parking.

S9. Notifying to jump to a parking interface.

In this step, after receiving the text prompt requesting confirmation to start remote parking, the BTM notifies the mobile APP to jump to the parking interface.

S10. Feeding back that the mobile APP is already in the parking interface.

In this step, the mobile APP jumps to the parking interface and feeds back a state that the mobile APP is already in the parking interface to the BTM.

S11. The user constantly slides the mobile.

In this step, after observing that the mobile APP is in the parking interface, the user constantly slides the mobile.

S12. The user constantly slides the mobile.

In this step, the mobile APP receives an operation of constantly sliding the mobile of the user, and sends information that the user constantly slides the mobile to the BTM.

S13. Sending a control state of the user.

In this step, the BTM sends control state information of the user to the APA ECU, wherein the control state is that the user constantly slides the mobile.

Specifically, the control state information of the user is: RmtReqParking=Ox1: user sliding circle.

S14. Sending parking preparation information.

In this step, after receiving the control state of the user, the APA ECU generates parking preparation information indicating that the vehicle may start parking, and sends the parking preparation information to the BTM.

Specifically, the parking preparation information is: HAP_TextDisp=Ox12: Auto parking be ready to break.

S15. Notifying to jump to a parking-in-progress interface.

In this step, after receiving the parking preparation information, the BTM notifies the mobile APP to jump to the parking-in-progress interface.

S16. The vehicle parks in.

In this step, the APA ECU controls various associated systems of the vehicle to park in the vehicle.

S17. Sending a test prompt: parking finished.

In this step, after finishing parking in the vehicle, the APA ECU generates a text prompt indicating that the vehicle is successfully parked in and sends the text prompt to the BTM.

Specifically, the text prompt indicating that the vehicle is successfully parked in is: Ox19: Parking finished.

S18. Switching to a parking success interface, and ask the driver to confirm whether to turn off the engine.

In this step, after receiving the text prompt indicating that the vehicle is successfully parked in, the BTM notifies the mobile APP to switch to the parking success interface, and asks the driver to confirm whether to turn off the engine in the parking success interface.

S 19. The driver confirms to turn off the engine.

In this step, the driver may confirm that the vehicle may be turned off through the parking success interface of the mobile APP.

S20. Requesting to turn off the engine.

In this step, after receiving the operation of the driver for confirming to turn off the engine, the mobile APP sends information request to turn off the engine to the BTM.

S21. Turning off the engine, raising windows and locking the door.

In this step, after receiving the request to turn off the engine sent by the mobile APP, the BTM controls the vehicle to execute operations such as turning off the engine, raising windows, and locking the door.

On the basis of the foregoing embodiments, the embodiments of the present disclosure further provide an automatic parking method.

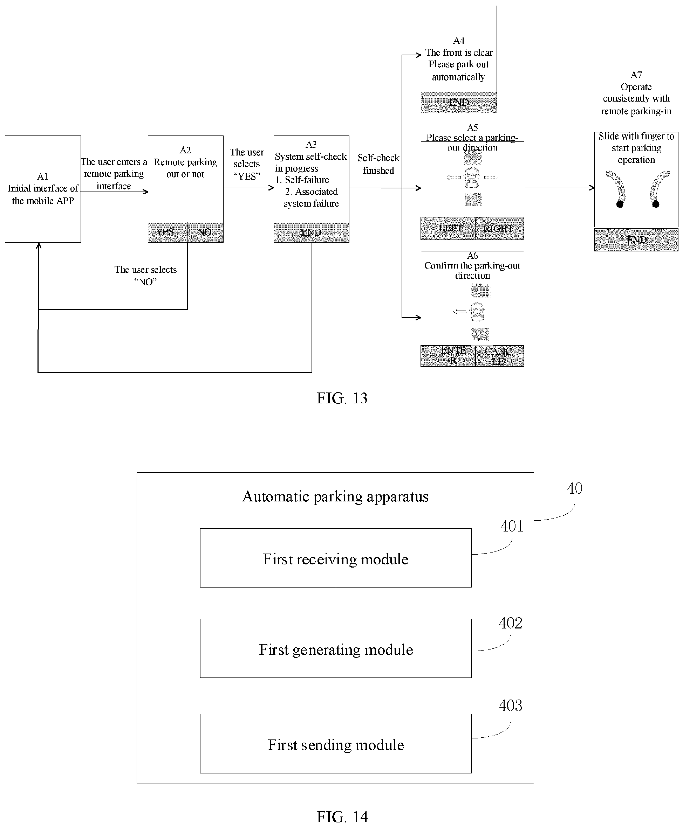

Referring to FIG. 13, which illustrates a schematic diagram showing operation of a remote parking-out method according to an embodiment of the present disclosure. FIG. 13 schematically shows a plurality of display interfaces of a mobile APP during a remote parking-out process of a vehicle, specifically including:

A1: initial interface of the mobile APP.

In this interface, the initial interface of the mobile APP configured to remotely park out the vehicle in the mobile terminal is displayed. In this interface, a user may set a remote parking-out option and a remote parking-in option.

A2: remote selection interface.

After selecting the remote parking-out option in the initial interface of the mobile APP, the mobile APP displays the A2 interface, in which the user may reconfirm whether to enter remote parking-out. If the user selects YES, the mobile APP displays an A3 interface, and if the user selects NO, the mobile APP displays the A1 interface again.

A3: system self-check interface.

After the user selects the remote parking-out in the A2 interface, various systems of the vehicle perform self-check, and self-check results are displayed in the A3 interface. The self-check results may include failures of an APA ECU itself or failures of various associated systems.

Specifically, if the self-check results show that there is a failure in the vehicle, the mobile APP displays the A1 interface again; if the self-check results show that there is no failure in the vehicle, the mobile APP displays A4, A5 or A6 interfaces.

A4: prompting interface for a road is clear in front of the vehicle.

If the vehicle detects that the road in front of the vehicle is clear, i.e., the user may park out the vehicle without turning on remote parking-out of the vehicle, the A4 interface is displayed.

A5: parking-out direction selection interface.

If the vehicle detects that the vehicle may be parked out in a plurality of directions, a plurality of parking-out directions are displayed in the A5 interface for the user to select.

A6: parking-out direction confirming interface.

If the vehicle may park out in a direction other than the front, the parking-out direction is displayed in the A5 interface, prompting the user to confirm the parking-out direction.

A7: user operation input interface.

After the user confirms the parking-out direction, the A7 interface is displayed, prompting the user to input operating information.

On the basis of the foregoing embodiments, the embodiments of the present disclosure further provide an automatic parking device.

Referring to FIG. 14, which illustrates a structural block diagram of an automatic parking device applied to a mobile terminal according to an embodiment of the present disclosure, which may specifically include the following modules:
a first receiving module 401 configured for receiving operating information input by a user on the condition of receiving an automatic parking start instruction; and
a first generating module 402 configured for generating a parking control instruction according to the operating information.

Optionally, the first generating module 402 may include:
a first converting submodule configured for, in the process of receiving the operating information, at every first preset time, converting a part of the operating information received in the first preset time into the parking control instruction according to a preset rule.

Optionally, the first generating module 402 may further include:
a second converting submodule configured for, after receiving the complete operating information, converting the received operating information into the parking control instruction according to a preset rule.

Optionally, the preset rule includes:
when the operating information is matched with a first preset operation, and a time when the operating information is matched with the first preset operation is greater than or equal to a second preset time, the parking control instruction generated being information of continuing automatic parking; and
when the operating information is not matched with the first preset operation, or the time when the operating information is matched with the first preset operation is less than the second preset time, the parking control instruction generated being information of interrupting automatic parking.

Optionally, the second converting submodule may include:
a converting unit configured for, after the complete operating information is received, and when a throughput of a communication channel between the mobile terminal and the vehicle is less than a throughput threshold, converting the received operating information into the parking control instruction according to the preset rule.

Optionally, the operating information includes: any one of gesture operating information, pressing operating information and sound control information for a display screen of the mobile terminal and shaking operating information for the mobile terminal.

Optionally, selection options of the operating information and preset operation tracks corresponding to the operating information are preset in the mobile terminal, and the selection options include a gesture operation option, a pressing operation option, a sound control option and a shaking operation option.

Optionally, when the operating information is the gesture operating information for the display screen of the mobile terminal, and the preset operation track is a preset gesture operation track, the first generating module 402 may include:
a display submodule configured for displaying the preset gesture operation track and a prompt message on the display screen of the mobile terminal, the prompt message being configured for prompting the user to input the operating information;
a first generating submodule configured for, when the operating information is received and the operating information is matched with the preset gesture operation track, generating the parking control instruction according to the present rule being information of continuing automatic parking; and
a second generating submodule configured for, when the operating information is received and the operating information is not matched with the preset gesture operation track, generating the parking control instruction according to the present rule being information of interrupting automatic parking.

Optionally, the device further includes:
a second receiving module configured for receiving and displaying current parking information of the vehicle sent by the vehicle, the current parking information of the vehicle being state information of various associated systems of the vehicle.

Optionally, the current parking information of the vehicle includes any one of normal parking information, recoverable parking-interrupted information and unrecoverable parking-interrupted information.

Optionally, when the current parking information of the vehicle is the recoverable parking-interrupted information, the device further includes:
a second generating module configured for, when the current parking information of the vehicle is the normal parking information, generating and displaying information requesting parking recovery; and
a third generating module configured for, if first confirmation information of the user for the information requesting parking recovery is received in a third preset time, generating parking recovery information and sending the parking recovery information to the vehicle.

Optionally, when the current parking information of the vehicle is the unrecoverable parking-interrupted information, the device further includes:
a fourth generating module configured for generating parking end information and sending the parking end information to the vehicle.

The device further includes a first sending module 403 configured for sending the parking control instruction to a vehicle for the vehicle to complete an automatic parking operation according to the parking control instruction.

In conclusion, the automatic parking device provided by the present disclosure includes: receiving the preset operation input by the user through the automatic parking system controller; acquiring the gear information of the vehicle; according to the preset operation and the gear information, generating the automatic parking start instruction and sending the automatic parking start instruction to the mobile terminal; and receiving the parking control instruction sent by the mobile terminal and completing the automatic parking operation according to the parking control instruction. In the embodiment of the present disclosure, in the process of controlling the vehicle to automatically park, the mobile terminal converts the operating information with large data capacity input by the user in the mobile terminal into the parking control instruction with small data capacity, and only sends the parking control instruction to the automatic parking system controller of the vehicle for the vehicle to complete automatic parking. On one hand, a communication information capacity between the mobile terminal and the vehicle in the automatic parking process is reduced, and then the efficiency of the automatic parking process is improved. Meanwhile, it is beneficial to expanding other functions needed to utilize communication data resources meanwhile. On the other hand, a calculation amount of the automatic parking system controller is reduced; moreover, it is convenient to support the user to customize the operating information and improve the user experience.

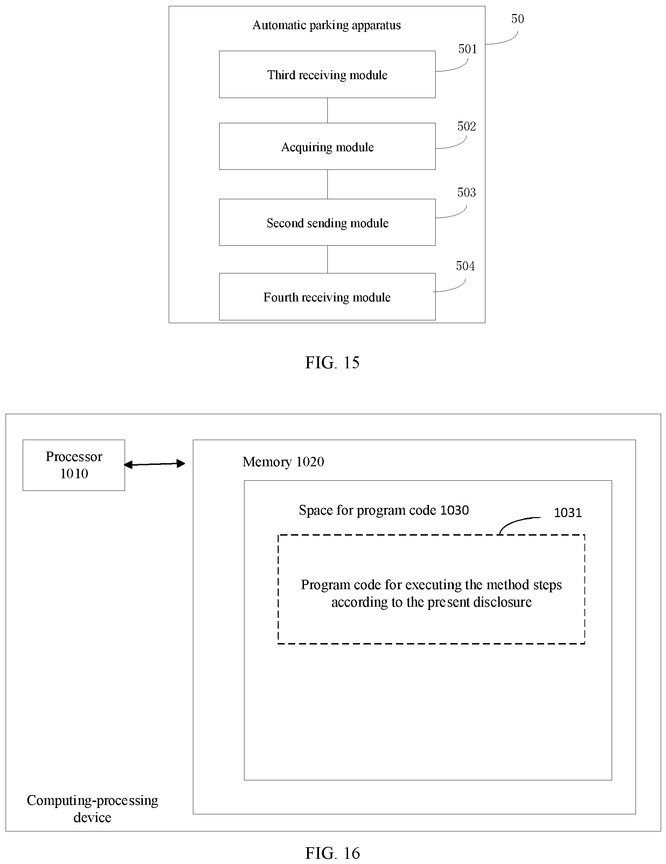

Referring to FIG. 15, which illustrates a structural block diagram of an automatic parking device applied to a vehicle including an automatic parking system controller according to an embodiment of the present disclosure, which may specifically include the following modules:
a third receiving module 501 configured for receiving a preset operation input by a user through the automatic parking system controller;
an acquiring module 502 configured for acquiring gear information of the vehicle;
a second sending module 503 configured for, according to the preset operation and the gear information, generating an automatic parking start instruction and sending the automatic parking start instruction to a mobile terminal, so that the mobile terminal receives the operating information input by the user on the condition of receiving the automatic parking start instruction, generates a parking control instruction according to the operating information, and sends the parking control instruction to the vehicle; and
a fourth receiving module 504 configured for receiving the parking control instruction sent by the mobile terminal and completing an automatic parking operation according to the parking control instruction.

Optionally, the device further includes:
a fifth generating module configured for acquiring state information sent by various associated systems of the vehicle, generating current parking information of the vehicle, and sending the current parking information of the vehicle to the mobile terminal.

Optionally, the current parking information of the vehicle includes any one of normal parking information, recoverable parking-interrupted information and unrecoverable parking-interrupted information.

Optionally, when the current parking information of the vehicle is the recoverable parking-interrupted information, the device further includes:
a sixth generating module configured for receiving the parking recovery information sent by the mobile terminal, and generating a parking recovery instruction according to the parking recovery information, and sending the parking recovery instruction to various associated systems of the vehicle for each associated system of the vehicle to complete the automatic parking operation.

Optionally, when the current parking information of the vehicle is the unrecoverable parking-interrupted information, the device further includes:
a seventh generating module configured for receiving parking end information sent by the mobile terminal, and generating a parking end instruction according to the parking end information, and sending the parking end instruction to various associated systems of the vehicle for each associated system of the vehicle to end the automatic parking operation.

Optionally, the second sending module 503 may include:
an acquiring submodule configured for acquiring environmental information sent by a vehicle sensor, generating valid parking spot information, and receiving selection operating information of the user for the valid parking spot information; acquiring speed information of the vehicle, and generating vehicle stationary information when the speed of the vehicle is 0 km/h;
a third generating submodule configured for generating and displaying brake reminding message;
a fourth generating submodule configured for acquiring speed information of the vehicle, and generating vehicle stationary information when the speed of the vehicle is 0 km/h; and
a fifth generating submodule configured for, on the condition of receiving the vehicle stationary information and the selection operation of the user for the valid parking spot information, generating the automatic parking start instruction according to the preset operation, the gear information, the selection operating information and the vehicle stationary information, and sending the automatic parking start instruction to the mobile terminal.

In conclusion, the automatic parking device provided by the present disclosure includes: receiving the preset operation input by the user through the automatic parking system controller; acquiring the gear information of the vehicle; according to the preset operation and the gear information, generating the automatic parking start instruction and sending the automatic parking start instruction to the mobile terminal; and receiving the parking control instruction sent by the mobile terminal and completing the automatic parking operation according to the parking control instruction. In the embodiment of the present disclosure, in the process of controlling the vehicle to automatically park, the mobile terminal converts the operating information with large data capacity input by the user in the mobile terminal into the parking control instruction with small data capacity, and only sends the parking control instruction to the automatic parking system controller of the vehicle for the vehicle to complete automatic parking. On one hand, a communication information capacity between the mobile terminal and the vehicle in the automatic parking process is reduced, and then the efficiency of the automatic parking process is improved. Meanwhile, it is beneficial to expanding other functions needed to utilize communication data resources meanwhile. On the other hand, a calculation amount of the automatic parking system controller is reduced; moreover, it is convenient to support the user to customize the operating information and improve the user experience.

It may be clearly understood by a person skilled in the art that, for the sake of convenience and brevity, a detailed working process of the foregoing system, device, and unit may refer to a corresponding process in the foregoing method embodiments, and will not be elaborated herein.

Those described above are merely preferred embodiments of the present disclosure, but are not intended to limit the present disclosure. Any modifications and equivalent substitutions and improvements made without departing from the principle of the present disclosure shall all fall in the protection scope of the present disclosure.

The foregoing descriptions are merely detailed embodiments of the present disclosure, but the protection scope of the present disclosure is not limited thereto. Any changes or substitutions that may be easily thought of by those familiar with the technical field in the technical scope disclosed in the present disclosure should be covered by the protection scope of the present disclosure. Therefore, the protection scope of the present disclosure should be subjected to the protection scope of the claims.

The above-described device embodiments are merely illustrative, wherein the units that are described as separate components may or may not be physically separate, and the components that are displayed as units may or may not be physical units; in other words, they may be located at the same one location, and may also be distributed to a plurality of network units. Part or all modules therein may be selected according to actual needs to realize the objective of achieving the technical solution of the embodiment. A person skilled in the art may understand and implement the technical solutions without paying creative work.

Each component embodiment of the present disclosure may be implemented by hardware, or by software modules that are operated on one or more processors, or by a combination thereof. A person skilled in the art should understand that some or all of the functions of some or all of the components of the computing-processing device according to the embodiments of the present disclosure may be implemented by using a microprocessor or a digital signal processor (DSP) in practice. The present disclosure may also be implemented as device or device programs (for example, computer programs and computer program products) for implementing part of or the whole of the method described herein. Such programs for implementing the present disclosure may be stored in a computer-readable medium, or may be in the form of one or more signals. Such signals may be downloaded from an Internet website, or provided on a carrier signal, or provided in any other forms.

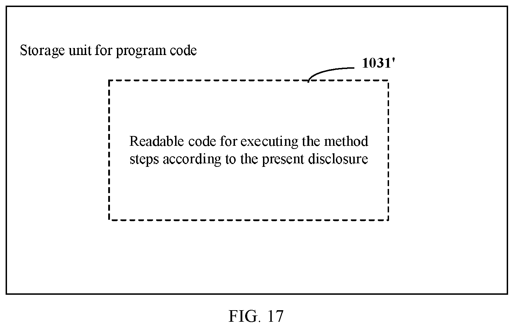

For example, FIG. 16 shows a computing-processing device that may implement the method according to the present disclosure. The computing-processing device traditionally includes a processor 1010 and a computer program product or computer-readable medium in the form of a memory 1020. The memory 1020 may be electronic memories such as flash memory, EEPROM (Electrically Erasable Programmable Read Only Memory), EPROM, hard disk or ROM. The memory 1020 has a storage space 1030 of a program code 1031 for implementing any steps of the above method. For example, the storage space 1030 for program code may contain program codes 1031 for individually implementing each of the steps of the above method. Those program codes may be read from one or more computer program products or be written into the one or more computer program products. These computer program products include program code carriers such as hard disks, compact disks (CD), memory cards, or floppy disks. Such computer program products are usually portable or fixed storage units as shown in FIG. 17. The storage unit may have storage segments or storage spaces with similar arrangement to the memory 1020 of the computing-processing device in FIG. 16. The program codes may for example be compressed in a suitable form. Generally, the storage unit contains a computer-readable code 1031', which may be read by a processor like 1010. When those codes are executed by the computing-processing device, the codes cause the computing-processing device to implement each of the steps of the method described above.

The "one embodiment", "an embodiment" or "one or more embodiments" as used herein means that particular features, structures or characteristics described with reference to an embodiment are included in at least one embodiment of the present disclosure. Moreover, it should be noted that here an example using the wording "in an embodiment" does not necessarily refer to the same one embodiment.

Many details are discussed in the specification provided herein. However, it may be understood that the embodiments of the present disclosure may be implemented without those concrete details. In some of the embodiments, well-known processes, structures and techniques are not described in detail, so as not to affect the understanding of the description.

In the claims, any reference signs between parentheses should not be construed as limiting the claims. The word "include" does not exclude elements or steps that are not listed in the claims. The word "a" or "an" preceding an element does not exclude the existing of a plurality of such elements. The present disclosure may be implemented by means of hardware including several different elements and by means of a properly programmed computer. In unit claims that list several devices, some of those devices may be embodied by the same item of hardware. The words first, second, third and so on do not denote any order. Those words may be interpreted as names.

## Claims

1. An automatic parking method, applied to a mobile terminal, wherein the method comprises:
when an automatic parking start instruction is received, receiving operating information input by a user;
generating a parking control instruction according to the operating information; and
sending the parking control instruction to a vehicle to enable the vehicle to complete an automatic parking operation according to the parking control instruction,
wherein
after the step of sending the parking control instruction to the vehicle, the method further comprises:
receiving and displaying current parking information of the vehicle sent by the vehicle, the current parking information of the vehicle being state information of various associated systems of the vehicle,
wherein the current parking information of the vehicle comprises any one of normal parking information, recoverable parking-interrupted information and unrecoverable parking-interrupted information,
**characterized in that**
when the current parking information of the vehicle is the recoverable parking-interrupted information, after the step of receiving and displaying the current parking information of the vehicle sent by the vehicle, the method further comprises:
when the current parking information of the vehicle is the normal parking information, generating and displaying information requesting parking recovery; and
if first confirmation information of the user for the information requesting parking recovery is received in a third preset time, generating parking recovery information and sending the parking recovery information to the vehicle; or
wherein when the current parking information of the vehicle is the unrecoverable parking-interrupted information, after the step of receiving and displaying the current parking information of the vehicle sent by the vehicle, the method further comprises:
generating parking end information and sending the parking end information to the vehicle.

2. The method according to claim 1, wherein the step of generating the parking control instruction according to the operating information comprises:
in a process of receiving the operating information, at every first preset time, converting a part of the operating information received in each of the first preset time into the parking control instruction according to a preset rule; and/or
wherein the step of generating the parking control instruction according to the operating information comprises:
after receiving the complete operating information, converting the received operating information into the parking control instruction according to a preset rule; wherein, the step of, after receiving the complete operating information, converting the received operating information into the parking control instruction according to the preset rule, comprises preferably:
after the complete operating information is received, and when a throughput of a communication channel between the mobile terminal and the vehicle is less than a throughput threshold, converting the received operating information into the parking control instruction according to the preset rule.

3. The method according to claim 1, wherein the operating information comprises any one of the followings: gesture operating information, pressing operating information and sound control information for a display screen of the mobile terminal and shaking operating information for the mobile terminal.

4. The method according to claim 3, wherein selection options of the operating information and preset operation tracks corresponding to the operating information are preset in the mobile terminal, and the selection options comprise: a gesture operation option, a pressing operation option, a sound control option and a shaking operation option; or
wherein when the operating information is the gesture operating information for the display screen of the mobile terminal, and the preset operation track is a preset gesture operation track, the step of generating the parking control instruction according to the operating information comprises:
displaying the preset gesture operation track and a prompt message on the display screen of the mobile terminal, the prompt message being configured for prompting the user to input the operating information;
when the operating information is received, and the operating information is matched with the preset gesture operation track, generating the parking control instruction according to the present rule as information of continuing automatic parking; and
when the operating information is received, and the operating information is not matched with the preset gesture operation track, generating the parking control instruction according to the present rule as information of interrupting automatic parking.

5. The method according to claim 2 , wherein the preset rule comprises:
when the operating information is matched with a first preset operation, and a time when the operating information is matched with the first preset operation is greater than or equal to a second preset time, the parking control instruction generated is information of continuing automatic parking; and
when the operating information is not matched with the first preset operation, or the time when the operating information is matched with the first preset operation is less than the second preset time, the parking control instruction generated being information of interrupting automatic parking.

6. An automatic parking method, applied to a vehicle comprising an automatic parking system controller, wherein the method comprises:
receiving a preset operation input by a user through the automatic parking system controller;
acquiring gear information of the vehicle;
according to the preset operation and the gear information, generating an automatic parking start instruction and sending the automatic parking start instruction to a mobile terminal, to enable the mobile terminal receives the operating information input by the user when the automatic parking start instruction is received, generates a parking control instruction according to the operating information, and sends the parking control instruction to the vehicle; and
receiving the parking control instruction sent by the mobile terminal and completing an automatic parking operation according to the parking control instruction,
wherein
after the step of receiving the parking control instruction sent by the mobile terminal, the method further comprises:
acquiring state information sent by various associated systems of the vehicle, generating current parking information of the vehicle, and sending the current parking information of the vehicle to the mobile terminal,
wherein the current parking information of the vehicle comprises any one of normal parking information, recoverable parking-interrupted information and unrecoverable parking-interrupted information,
**characterized in that**
when the current parking information of the vehicle is the recoverable parking-interrupted information, after the step of acquiring the state information sent by various associated systems of the vehicle, generating the current parking information of the vehicle, and sending the current parking information of the vehicle to the mobile terminal, the method further comprises:
receiving parking recovery information sent by the mobile terminal, and generating a parking recovery instruction according to the parking recovery information, and sending the parking recovery instruction to various associated systems of the vehicle for various associated systems of the vehicle to complete the automatic parking operation; or
wherein when the current parking information of the vehicle is the unrecoverable parking-interrupted information, after the steps of acquiring the state information sent by various associated systems of the vehicle, generating the current parking information of the vehicle, and sending the current parking information of the vehicle to the mobile terminal, the method further comprises:
receiving parking end information sent by the mobile terminal, and generating a parking end instruction according to the parking end information, and sending the parking end instruction to various associated systems of the vehicle for various associated systems of the vehicle to end the automatic parking operation.

7. The method according to claim 6, wherein the step of, according to the preset operation and the gear information, generating the automatic parking start instruction and sending the automatic parking start instruction to the mobile terminal, comprises:
acquiring environmental information sent by a vehicle sensor, generating valid parking spot information, and receiving selection operating information of the user for the valid parking spot information;
generating and displaying brake reminding message;
acquiring speed information of the vehicle, and generating vehicle stationary information when the speed of the vehicle is 0 km/h; and
on the condition of receiving the vehicle stationary information and the selection operation of the user for the valid parking spot information, generating the automatic parking start instruction according to the preset operation, the gear information, the selection operating information and the vehicle stationary information, and sending the automatic parking start instruction to the mobile terminal.

8. An automatic parking system, comprising: a mobile terminal and a vehicle comprising an automatic parking system controller, wherein the mobile terminal and the vehicle are communicatively connected;
the vehicle configured to receive a preset operation input by a user through the automatic parking system controller;
the vehicle configured to acquire gear information of the vehicle, and according to the preset operation and the gear information, generates an automatic parking start instruction and sends the automatic parking start instruction to the mobile terminal;
the mobile terminal configured to receive the operating information input by the user on the condition of receiving the automatic parking start instruction, generates a parking control instruction according to the operating information, and sends the parking control instruction to the vehicle; and
the vehicle configured to complete an automatic parking operation according to the parking control instruction,
- the mobile terminal configured for:
receiving and displaying current parking information of the vehicle sent by the vehicle, the current parking information of the vehicle being state information of various associated systems of the vehicle, wherein the current parking information of the vehicle comprises any one of normal parking information, recoverable parking-interrupted information and unrecoverable parking-interrupted information, **characterized in that** when the current parking information of the vehicle is the recoverable parking-interrupted information, after the step of receiving and displaying the current parking information of the vehicle sent by the vehicle, the method further comprises: when the current parking information of the vehicle is the normal parking information, generating and displaying information requesting parking recovery; and if first confirmation information of the user for the information requesting parking recovery is received in a third preset time, generating parking recovery information and sending the parking recovery information to the vehicle; or wherein when the current parking information of the vehicle is the unrecoverable parking-interrupted information, after the step of receiving and displaying the current parking information of the vehicle sent by the vehicle, the method further comprises: generating parking end information and sending the parking end information to the vehicle; or
- the vehicle configured for:
acquiring state information sent by various associated systems of the vehicle, generating current parking information of the vehicle, and sending the current parking information of the vehicle to the mobile terminal, wherein the current parking information of the vehicle comprises any one of normal parking information, recoverable parking-interrupted information and unrecoverable parking-interrupted information, **characterized in that** when the current parking information of the vehicle is the recoverable parking-interrupted information, after the step of acquiring the state information sent by various associated systems of the vehicle, generating the current parking information of the vehicle, and sending the current parking information of the vehicle to the mobile terminal, the method further comprises: receiving parking recovery information sent by the mobile terminal, and generating a parking recovery instruction according to the parking recovery information, and sending the parking recovery instruction to various associated systems of the vehicle for various associated systems of the vehicle to complete the automatic parking operation; or wherein when the current parking information of the vehicle is the unrecoverable parking-interrupted information, after the steps of acquiring the state information sent by various associated systems of the vehicle, generating the current parking information of the vehicle, and sending the current parking information of the vehicle to the mobile terminal, the method further comprises: receiving parking end information sent by the mobile terminal, and generating a parking end instruction according to the parking end information, and sending the parking end instruction to various associated systems of the vehicle for various associated systems of the vehicle to end the automatic parking operation.

9. A computing-processing device, wherein the computing-processing device comprises:
a memory in which a computer-readable code is stored; and
one or more processors, wherein when the computer-readable code is executed by the one or more processors, the computing-processing device executes the automatic parking method according to any one of claims 1 to 7.

## Patentansprüche

1. Automatisches Parkverfahren, angewendet auf ein mobiles Endgerät, wobei das Verfahren die folgenden Schritte aufweist:
wenn ein Befehl zum Starten des automatischen Parkens empfangen wird, Empfangen von durch einen Benutzer eingegebenen Bedienungsinformationen;
Erzeugen eines Parksteuerbefehls gemäß den Bedienungsinformationen; und
Senden des Parksteuerbefehls an ein Fahrzeug, um das Fahrzeug in die Lage zu versetzen, einen automatischen Parkvorgang gemäß dem Parksteuerbefehl abzuschließen,
wobei das Verfahren nach dem Schritt des Sendens des Parksteuerbefehls an das Fahrzeug ferner den folgenden Schritt aufweist:
Empfangen und Anzeigen von dem Fahrzeug gesendeter aktueller Parkinformationen des Fahrzeugs, wobei die aktuellen Parkinformationen des Fahrzeugs Zustandsinformationen verschiedener zugehöriger Systeme des Fahrzeugs sind,
wobei die aktuellen Parkinformationen des Fahrzeugs normale Parkinformationen, wiederherstellbare Parkunterbrechungsinformationen oder nicht wiederherstellbare Parkunterbrechungsinformationen aufweisen,
**dadurch gekennzeichnet, dass**,
falls die aktuellen Parkinformationen des Fahrzeugs die wiederherstellbaren Parkunterbrechungsinformationen sind, das Verfahren nach dem Schritt des Empfangens und Anzeigens von dem Fahrzeug gesendeter aktueller Parkinformationen des Fahrzeugs ferner die folgenden Schritte aufweist:
falls die aktuellen Parkinformationen des Fahrzeugs die wiederherstellbaren Parkunterbrechungsinformationen sind, Erzeugen und Anzeigen von Informationen zur Anforderung der Wiederherstellung des Parkens; und
wenn erste Bestätigungsinformationen des Nutzers hinsichtlich der Informationen zur Anforderung der Wiederherstellung des Parkens innerhalb eines dritten Zeitraums empfangen werden, Erzeugen von Parkwiederherstellungsinformationen und Senden der Parkwiederherstellungsinformationen an das Fahrzeug; oder
wobei, falls die aktuellen Parkinformationen des Fahrzeugs die nicht wiederherstellbaren Parkunterbrechungsinformationen sind, das Verfahren nach dem Schritt des Empfangens und Anzeigens von dem Fahrzeug gesendeter aktueller Parkinformationen des Fahrzeugs ferner den folgenden Schritt aufweist:
Erzeugen von Parkende-Informationen und Senden der Parkende-Informationen an das Fahrzeug.

2. Verfahren nach Anspruch 1, bei welchem der Schritt des Erzeugens des Parksteuerbefehls gemäß den Bedienungsinformationen den folgenden Schritt aufweist:
bei einem Vorgang des Empfangens der Bedienungsinformationen in jedem ersten voreingestellten Zeitraum, Umwandeln eines Teils der in jedem ersten voreingestellten Zeitraum empfangenen Bedienungsinformationen in den Parksteuerbefehl gemäß einer voreingestellten Regel; und/oder
wobei der Schritt des Erzeugens des Parksteuerbefehls gemäß den Bedienungsinformationen den folgenden Schritt aufweist:
nach dem Empfangen der vollständigen Bedienungsinformationen, Umwandeln der empfangenen Bedienungsinformationen in den Parksteuerbefehl gemäß einer voreingestellten Regel;
wobei der Schritt des Umwandelns der empfangenen Bedienungsinformationen in den Parksteuerbefehl gemäß einer voreingestellten Regel nach dem Empfangen der vollständigen Bedienungsinformationen vorzugsweise den folgenden Schritt aufweist:
nach dem Empfangen der vollständigen Bedienungsinformationen und wenn ein Durchsatz eines Kommunikationskanals zwischen dem Endgerät und dem Fahrzeug geringer als ein Durchsatzschwellenwert ist, Umwandeln der empfangenen Bedienungsinformationen in den Parksteuerbefehl gemäß der voreingestellten Regel.

3. Verfahren nach Anspruch 1, bei welchem die Bedienungsinformationen eine der folgenden Informationen aufweisen: Gestenbedienungsinformationen, Druckbedienungsinformationen, Klangsteuerinformationen für einen Anzeigebildschirm des Endgeräts und Schüttelbedienungsinformationen für das mobile Endgerät.

4. Verfahren nach Anspruch 3, bei welchem Wahlmöglichkeiten der Bedienungsinformationen und voreingestellte Bedienungsspuren, welche den Bedienungsinformationen entsprechen, in dem mobilen Endgerät voreingestellt sind, und die Wahlmöglichkeiten aufweisen: eine Gestenbedienungsmöglichkeit, eine Druckbedienungsmöglichkeit, eine Klangsteuermöglichkeit und eine Schüttelbedienungsmöglichkeit; oder
wobei, wenn die Bedienungsinformationen die Gestenbedienungsinformationen für den Anzeigebildschirm sind, und die voreingestellte Bedienungsspur eine voreingestellte Gestenbedienungsspur ist, der Schritt des Erzeugens des Parksteuerbefehls gemäß den Bedienungsinformationen den folgenden Schritt aufweist:
Anzeigen der voreingestellten Gestenbedienungsspur und einer Eingabeaufforderungsnachricht auf dem Anzeigebildschirm des mobilen Endgeräts, wobei die Eingabeaufforderungsnachricht dazu ausgebildet ist, den Nutzer zur Eingabe der Bedienungsinformationen aufzufordern;
wenn die Bedienungsinformationen empfangen wurden, und die Bedienungsinformationen mit der voreingestellten Gestenbedienungsspur übereinstimmen, Erzeugen des Parksteuerbefehls gemäß der voreingestellten Regel als Informationen bezüglich des Fortsetzens des automatischen Parkens; und
wenn die Bedienungsinformationen empfangen wurden, und die Bedienungsinformationen nicht mit der voreingestellten Gestenbedienungsspur übereinstimmen, Erzeugen des Parksteuerbefehls gemäß der voreingestellten Regel als Informationen bezüglich des Unterbrechens des automatischen Parkens.

5. Verfahren nach Anspruch 2, bei welchem die voreingestellte Regel aufweist:
wenn die Bedienungsinformationen mit einer ersten voreingestellten Bedienung übereinstimmen, und ein Zeitraum, in welchem die Bedienungsinformationen mit der ersten voreingestellten Bedienung übereinstimmt, größer oder gleich einem zweiten voreingestellten Zeitraum ist, handelt es sich bei dem erzeugten Parksteuerbefehl um Informationen bezüglich des Fortsetzens des automatischen Parkens; und
wenn die Bedienungsinformationen nicht mit der ersten voreingestellten Bedienung übereinstimmen, und der Zeitraum, in welchem die Bedienungsinformationen mit der ersten voreingestellten Bedienung übereinstimmt, geringer als ein zweiter voreingestellter Zeitraum ist, handelt es sich bei dem erzeugten Parksteuerbefehl um Informationen bezüglich des Fortsetzens des automatischen Parkens.

6. Automatisches Parkverfahren, angewendet auf ein Fahrzeug mit einer automatischen Parksystemsteuerung, wobei das Verfahren die folgenden Schritte aufweist:
Empfangen einer von einem Benutzer eingegebenen voreingestellten Bedienung durch die automatische Parksystemsteuerung;
Erfassen von Ganginformationen des Fahrzeugs;
gemäß der voreingestellten Bedienung und den Ganginformationen, Erzeugen eines Befehls zum Starten des automatischen Parkens und Senden des Befehls zum Starten des automatischen Parkens an ein mobiles Endgerät, so dass das mobile Endgerät beim Empfang des Befehls zum Starten des automatischen Parkens die von dem Nutzer eingegebenen Bedienungsinformationen empfängt, einen Parksteuerbefehl gemäß den Bedienungsinformationen erzeugt, und den Parksteuerbefehl an das Fahrzeug sendet; und
Empfangen des von dem mobilen Endgerät gesendeten Parksteuerbefehls und Abschließen eines automatischen Parkvorgangs gemäß dem Parksteuerbefehl,
wobei das Verfahren nach dem Schritt des Empfangens des von dem mobilen Endgerät gesendeten Parksteuerbefehls ferner die folgenden Schritte aufweist:
Erfassen von durch verschiedene zugehörige Systeme des Fahrzeugs gesendeten Zustandsinformationen, Erzeugen aktueller Parkinformationen des Fahrzeugs, und Senden der aktuellen Parkinformationen des Fahrzeugs an das mobile Endgerät,
wobei die aktuellen Parkinformationen des Fahrzeugs normale Parkinformationen, wiederherstellbare Parkunterbrechungsinformationen oder nicht wiederherstellbare Parkunterbrechungsinformationen aufweisen,
**dadurch gekennzeichnet, dass**,
falls die aktuellen Parkinformationen des Fahrzeugs die wiederherstellbaren Parkunterbrechungsinformationen sind, das Verfahren nach den Schritten des Erfassens von durch verschiedene zugehörige Systeme des Fahrzeugs gesendeten Zustandsinformationen, des Erzeugens aktueller Parkinformationen des Fahrzeugs, und des Sendens der aktuellen Parkinformationen des Fahrzeugs an das mobile Endgerät ferner die folgenden Schritte aufweist:
Empfangen von durch das mobile Endgerät gesendeten Parkwiederherstellungsinformationen, und Erzeugen eines Parkwiederherstellungsbefehls gemäß den Parkwiederherstellungsinformationen, und Senden des Parkwiederherstellungsbefehls an verschiedene zugehörige Systeme des Fahrzeugs, so dass verschiedene zugehörige Systeme des Fahrzeugs den automatischen Parkvorgang abschließen; oder
wobei, wenn die aktuellen Parkinformationen des Fahrzeugs die nicht wiederherstellbaren Parkunterbrechungsinformationen sind, das Verfahren nach den Schritten des Erfassens von durch verschiedene zugehörige Systeme des Fahrzeugs gesendeten Zustandsinformationen, des Erzeugens aktueller Parkinformationen des Fahrzeugs, und des Sendens der aktuellen Parkinformationen des Fahrzeugs an das mobile Endgerät ferner die folgenden Schritte aufweist:
Empfangen von durch das mobile Endgerät gesendeten Parkende-Informationen, und Erzeugen eines Parkende-Befehls gemäß den Parkende-Informationen, und Senden des Parkende-Befehls an verschiedene zugehörige Systeme des Fahrzeugs, so dass verschiedene zugehörige Systeme des Fahrzeugs den automatischen Parkvorgang beenden.

7. Verfahren nach Anspruch 6, bei welchem der Schritt des gemäß der voreingestellten Bedienung und den Ganginformationen erfolgenden Erzeugens eines Befehls zum Starten des automatischen Parkens und des Sendens des Befehls zum Starten des automatischen Parkens an das mobile Endgerät die folgenden Schritte aufweist:
Erfassen von durch einen Fahrzeugsensor gesendeten Umgebungsinformationen, Erzeugen von Informationen bezüglich eines gültigen Parkplatzes, und Empfangen von Wahlbedienungsinformationen des Nutzers hinsichtlich der Informationen bezüglich eines gültigen Parkplatzes;
Erzeugen und Anzeigen einer Bremserinnerungsnachricht;
Erfassen von Geschwindigkeitsinformationen, und Erzeugen von Fahrzeugstillstandinformationen, wenn die Geschwindigkeit des Fahrzeugs 0 km/h beträgt; und
wenn die Fahrzeugstillstandinformationen und die Wahlbedienung des Nutzers hinsichtlich der Informationen bezüglich eines gültigen Parkplatzes empfangen wurden, Erzeugen des Befehls zum Starten des automatischen Parkens gemäß der voreingestellten Bedienung, den Ganginformationen, den Wahlbedienungsinformationen und den Fahrzeugstillstandinformationen, und Senden des Befehls zum Starten des automatischen Parkens an das mobile Endgerät.

8. Automatisches Parksystem mit: einem mobilen Endgerät und einem Fahrzeug mit einer automatischen Parksystemsteuerung, wobei das mobile Endgerät und das Fahrzeug kommunikationsmäßig verbunden sind;
wobei das Fahrzeug zum Empfangen einer von einem Benutzer eingegebenen voreingestellten Bedienung durch die automatische Parksystemsteuerung ausgebildet ist;
wobei das Fahrzeug dazu ausgebildet ist, Ganginformationen des Fahrzeugs zu erfassen, und gemäß der voreingestellten Bedienung und den Ganginformationen, einen Befehl zum Starten des automatischen Parkens zu erzeugen und den Befehl zum Starten des automatischen Parkens an das mobile Endgerät zu senden;
wobei das mobile Endgerät dazu ausgebildet ist, beim Empfang des Befehls zum Starten des automatischen Parkens die von dem Nutzer eingegebenen Bedienungsinformationen zu empfangen, einen Parksteuerbefehl gemäß den Bedienungsinformationen zu erzeugen, und den Parksteuerbefehl an das Fahrzeug zu senden; und
wobei das Fahrzeug dazu ausgebildet ist, einen automatischen Parkvorgang gemäß dem Parksteuerbefehl abzuschließen,
- wobei das mobile Endgerät dazu ausgebildet ist,
von dem Fahrzeug gesendete aktuelle Parkinformationen des Fahrzeugs zu empfangen und anzuzeigen, wobei die aktuellen Parkinformationen des Fahrzeugs Zustandsinformationen verschiedener zugehöriger Systeme des Fahrzeugs sind, wobei die aktuellen Parkinformationen des Fahrzeugs normale Parkinformationen, wiederherstellbare Parkunterbrechungsinformationen oder nicht wiederherstellbare Parkunterbrechungsinformationen aufweisen,
**dadurch gekennzeichnet, dass**,
falls die aktuellen Parkinformationen des Fahrzeugs die wiederherstellbaren Parkunterbrechungsinformationen sind, das Verfahren nach dem Schritt des Empfangens und Anzeigens von dem Fahrzeug gesendeter aktueller Parkinformationen des Fahrzeugs ferner die folgenden Schritte aufweist: falls die aktuellen Parkinformationen des Fahrzeugs die wiederherstellbaren Parkunterbrechungsinformationen sind, Erzeugen und Anzeigen von Informationen zur Anforderung der Wiederherstellung des Parkens; und wenn erste Bestätigungsinformationen des Nutzers hinsichtlich der Informationen zur Anforderung der Wiederherstellung des Parkens innerhalb eines dritten Zeitraums empfangen werden, Erzeugen von Parkwiederherstellungsinformationen und Senden der Parkwiederherstellungsinformationen an das Fahrzeug; oder wobei, falls die aktuellen Parkinformationen des Fahrzeugs die nicht wiederherstellbaren Parkunterbrechungsinformationen sind, das Verfahren nach dem Schritt des Empfangens und Anzeigens von dem Fahrzeug gesendeter aktueller Parkinformationen des Fahrzeugs ferner den folgenden Schritt aufweist: Erzeugen von Parkende-Informationen und Senden der Parkende-Informationen an das Fahrzeug; oder
- das Fahrzeug dazu ausgebildet ist,
durch verschiedene zugehörige Systeme des Fahrzeugs gesendete Zustandsinformationen zu erfassen, aktuelle Parkinformationen des Fahrzeugs zu erzeugen, und die aktuellen Parkinformationen des Fahrzeugs an das mobile Endgerät zu senden, wobei die aktuellen Parkinformationen des Fahrzeugs normale Parkinformationen, wiederherstellbare Parkunterbrechungsinformationen oder nicht wiederherstellbare Parkunterbrechungsinformationen aufweisen,
**dadurch gekennzeichnet, dass**,
falls die aktuellen Parkinformationen des Fahrzeugs die wiederherstellbaren Parkunterbrechungsinformationen sind, das Verfahren nach den Schritten des Erfassens von durch verschiedene zugehörige Systeme des Fahrzeugs gesendeten Zustandsinformationen, des Erzeugens aktueller Parkinformationen des Fahrzeugs, und des Sendens der aktuellen Parkinformationen des Fahrzeugs an das mobile Endgerät ferner die folgenden Schritte aufweist: Empfangen von durch das mobile Endgerät gesendeten Parkwiederherstellungsinformationen, und Erzeugen eines Parkwiederherstellungsbefehls gemäß den Parkwiederherstellungsinformationen, und Senden des Parkwiederherstellungsbefehls an verschiedene zugehörige Systeme des Fahrzeugs, so dass verschiedene zugehörige Systeme des Fahrzeugs den automatischen Parkvorgang abschließen; oder wobei, wenn die aktuellen Parkinformationen des Fahrzeugs die nicht wiederherstellbaren Parkunterbrechungsinformationen sind, das Verfahren nach den Schritten des Erfassens von durch verschiedene zugehörige Systeme des Fahrzeugs gesendeten Zustandsinformationen, des Erzeugens aktueller Parkinformationen des Fahrzeugs, und des Sendens der aktuellen Parkinformationen des Fahrzeugs an das mobile Endgerät ferner die folgenden Schritte aufweist: Empfangen von durch das mobile Endgerät gesendeten Parkende-Informationen, und Erzeugen eines Parkende-Befehls gemäß den Parkende-Informationen, und Senden des Parkende-Befehls an verschiedene zugehörige Systeme des Fahrzeugs, so dass verschiedene zugehörige Systeme des Fahrzeugs den automatischen Parkvorgang beenden.

9. Rechen-Verarbeitungsvorrichtung, bei welcher die Rechen-Verarbeitungsvorrichtung aufweist:
einen Speicher, in welchem ein computerlesbarer Code gespeichert ist; und
einem oder mehr Prozessoren, wobei bei Ausführung des computerlesbaren Codes durch den einen oder die mehreren Prozessoren die Rechen-Verarbeitungsvorrichtung das automatische Parkverfahren nach einem der Ansprüche 1 bis 7 ausführt.

## Revendications

1. Procédé de stationnement automatique, appliqué à un terminal mobile, dans lequel le procédé comprend :
lorsqu'une instruction de démarrage de stationnement automatique est reçue, la réception d'informations opérationnelles entrées par un utilisateur ;
la génération d'une instruction de commande de stationnement en fonction des informations opérationnelles ; et
l'envoi de l'instruction de commande de stationnement à un véhicule pour permettre au véhicule d'effectuer une opération de stationnement automatique selon l'instruction de commande de stationnement,
dans lequel
après l'étape d'envoi de l'instruction de commande de stationnement au véhicule, le procédé comprend en outre :
la réception et l'affichage d'informations de stationnement actuelles du véhicule envoyées par le véhicule, les informations de stationnement actuelles du véhicule étant des informations d'état de divers systèmes associés du véhicule,
dans lequel les informations de stationnement actuelles du véhicule comprennent l'un quelconque parmi des informations de stationnement normal, des informations de stationnement interrompu avec reprise possible et des informations de stationnement interrompu sans reprise possible,
**caractérisé en ce que**
lorsque les informations de stationnement actuelles du véhicule sont les informations de stationnement interrompu avec reprise possible, après l'étape de réception et d'affichage des informations de stationnement actuelles du véhicule envoyées par le véhicule, le procédé comprend en outre :
lorsque les informations de stationnement actuelles du véhicule sont les informations de stationnement normal, la génération et l'affichage d'informations demandant la reprise du stationnement ; et
si de premières informations de confirmation de l'utilisateur pour les informations demandant la reprise du stationnement sont reçues dans un troisième temps prédéfini, la génération d'informations de reprise de stationnement et l'envoi des informations de reprise de stationnement au véhicule ; ou
dans lequel, lorsque les informations de stationnement actuelles du véhicule sont les informations de stationnement interrompu sans reprise possible, après l'étape de réception et d'affichage des informations de stationnement actuelles du véhicule envoyées par le véhicule, le procédé comprend en outre :
la génération d'informations de fin de stationnement et l'envoi des informations de fin de stationnement au véhicule.

2. Procédé selon la revendication 1, dans lequel l'étape de génération de l'instruction de commande de stationnement en fonction des informations opérationnelles comprend :
dans un processus de réception des informations opérationnelles, à chaque premier instant prédéfini, la conversion d'une partie des informations opérationnelles reçues à chacun des premiers instants prédéfinis en instruction de commande de stationnement selon une règle prédéfinie ; et/ou
dans lequel l'étape de génération de l'instruction de commande de stationnement en fonction des informations opérationnelles comprend :
après avoir reçu les informations opérationnelles complètes, la conversion des informations opérationnelles reçues en instruction de commande de stationnement selon une règle prédéfinie ; dans lequel, après avoir reçu les informations opérationnelles complètes, l'étape consistant à convertir les informations opérationnelles reçues en instruction de commande de stationnement conformément à la règle prédéfinie, comprend de préférence :
après la réception des informations opérationnelles complètes, et lorsqu'un débit d'un canal de communication entre le terminal mobile et le véhicule est inférieur à un seuil de débit, la conversion des informations opérationnelles reçues en instruction de commande de stationnement selon la règle prédéfinie.

3. Procédé selon la revendication 1, dans lequel les informations opérationnelles comprennent l'un quelconque parmi : des informations opérationnelles gestuelles, des informations opérationnelles de pression et des informations de commande sonore pour un écran d'affichage du terminal mobile et des informations opérationnelles de secousses pour le terminal mobile.

4. Procédé selon la revendication 3, dans lequel des options de sélection des informations opérationnelles et des traces d'opération prédéfinies correspondant aux informations opérationnelles sont prédéfinies dans le terminal mobile, et les options de sélection comprennent : une option d'opération gestuelle, une option d'opération de pression, une option de commande sonore et une option d'opération de secousses ; ou
dans lequel lorsque les informations opérationnelles sont les informations opérationnelles gestuelles pour l'écran d'affichage du terminal mobile, et que la trace d'opération prédéfinie est une trace d'opération gestuelle prédéfinie, l'étape de génération de l'instruction de commande de stationnement en fonction des informations opérationnelles comprend :
l'affichage de la trace d'opération gestuelle prédéfinie et d'un message d'invite sur l'écran d'affichage du terminal mobile, le message d'invite étant configuré pour inviter l'utilisateur à entrer les informations opérationnelles ;
lorsque les informations opérationnelles sont reçues, et que les informations opérationnelles correspondent à la trace d'opération gestuelle prédéfinie, la génération de l'instruction de commande de stationnement selon la présente règle en tant qu'informations de poursuite du stationnement automatique ; et
lorsque les informations opérationnelles sont reçues, et que les informations opérationnelles ne correspondent pas à la trace d'opération gestuelle prédéfinie, la génération de l'instruction de commande de stationnement selon la présente règle en tant qu'informations d'interruption du stationnement automatique.

5. Procédé selon la revendication 2, dans lequel la règle prédéfinie comprend :
lorsque les informations opérationnelles correspondent à une première opération prédéfinie, et qu'un temps où les informations opérationnelles correspondent à la première opération prédéfinie est supérieur ou égal à un second temps prédéfini, l'instruction de commande de stationnement générée est une information de poursuite du stationnement automatique ; et
lorsque les informations opérationnelles ne correspondent pas à la première opération prédéfinie, ou que le temps où les informations opérationnelles correspondent à la première opération prédéfinie est inférieur au second temps prédéfini, l'instruction de commande de stationnement générée est une information d'interruption du stationnement automatique.

6. Procédé de stationnement automatique, appliqué à un véhicule comprenant un dispositif de commande de système de stationnement automatique, dans lequel le procédé comprend :
la réception d'une opération prédéfinie entrée par un utilisateur au moyen du dispositif de commande de système de stationnement automatique ;
l'acquisition d'informations de rapport de vitesse du véhicule ;
en fonction de l'opération prédéfinie et des informations de rapport de vitesse, la génération d'une instruction de démarrage du stationnement automatique et l'envoi de l'instruction de démarrage du stationnement automatique à un terminal mobile, pour permettre au terminal mobile de recevoir les informations opérationnelles entrées par l'utilisateur lorsque l'instruction de démarrage du stationnement automatique est reçue, de générer une instruction de commande de stationnement en fonction des informations opérationnelles, et d'envoyer l'instruction de commande de stationnement au véhicule ; et
la réception de l'instruction de commande de stationnement envoyée par le terminal mobile et la réalisation d'une opération de stationnement automatique conformément à l'instruction de commande de stationnement,
dans lequel
après l'étape de réception de l'instruction de commande de stationnement envoyée par le terminal mobile, le procédé comprend en outre :
l'acquisition d'informations d'état envoyées par divers systèmes associés du véhicule, la génération d'informations de stationnement actuelles du véhicule, et l'envoi des informations de stationnement actuelles du véhicule au terminal mobile,
dans lequel les informations de stationnement actuelles du véhicule comprennent l'un quelconque parmi des informations de stationnement normal, des informations de stationnement interrompu avec reprise possible et des informations de stationnement interrompu sans reprise possible,
**caractérisé en ce que**
lorsque les informations de stationnement actuelles du véhicule sont les informations de stationnement interrompu avec reprise possible, après l'étape d'acquisition des informations d'état envoyées par divers systèmes associés du véhicule, de génération des informations de stationnement actuelles du véhicule, et d'envoi des informations de stationnement actuelles du véhicule au terminal mobile, le procédé comprend en outre :
la réception d'informations de reprise de stationnement envoyées par le terminal mobile, et la génération d'une instruction de reprise de stationnement en fonction des informations de reprise de stationnement, et l'envoi de l'instruction de reprise de stationnement à divers systèmes associés du véhicule pour que divers systèmes associés du véhicule achèvent l'opération de stationnement automatique ; ou
dans lequel, lorsque les informations de stationnement actuelles du véhicule sont les informations de stationnement interrompu sans reprise possible, après les étapes d'acquisition des informations d'état envoyées par divers systèmes associés du véhicule, de génération des informations de stationnement actuelles du véhicule et d'envoi des informations de stationnement actuelles du véhicule au terminal mobile, le procédé comprend en outre :
la réception d'informations de fin de stationnement envoyées par le terminal mobile, et la génération d'une instruction de fin de stationnement en fonction des informations de fin de stationnement, et l'envoi de l'instruction de fin de stationnement à divers systèmes associés du véhicule pour divers systèmes associés du véhicule afin de mettre fin à l'opération de stationnement automatique.

7. Procédé selon la revendication 6, dans lequel l'étape consistant, en fonction de l'opération prédéfinie et des informations de rapport de vitesse, à générer l'instruction de démarrage du stationnement automatique et à envoyer l'instruction de démarrage du stationnement automatique au terminal mobile, comprend :
l'acquisition d'informations d'environnement envoyées par un capteur de véhicule, la génération d'informations de place de stationnement valide, et la réception d'informations opérationnelles de sélection de l'utilisateur pour les informations de place de stationnement valide ;
la génération et l'affichage d'un message de rappel de freinage ;
l'acquisition d'informations de vitesse du véhicule et la génération d'informations d'arrêt du véhicule lorsque la vitesse du véhicule est de 0 km/h ; et
à condition de recevoir les informations d'arrêt du véhicule et l'opération de sélection de l'utilisateur pour les informations de place de stationnement valide, la génération de l'instruction de démarrage du stationnement automatique en fonction de l'opération prédéfinie, des informations de rapport de vitesse, des informations opérationnelles de sélection et des informations d'arrêt du véhicule, et l'envoi de l'instruction de démarrage du stationnement automatique au terminal mobile.

8. Système de stationnement automatique, comprenant : un terminal mobile et un véhicule comprenant un dispositif de commande de système de stationnement automatique, dans lequel le terminal mobile et le véhicule sont connectés en communication ;
le véhicule configuré pour recevoir une opération prédéfinie entrée par un utilisateur au moyen du dispositif de commande de système de stationnement automatique ;
le véhicule configuré pour acquérir des informations de rapport de vitesse du véhicule et, en fonction de l'opération prédéfinie et des informations de rapport de vitesse, génère une instruction de démarrage du stationnement automatique et envoie l'instruction de démarrage du stationnement automatique au terminal mobile ;
le terminal mobile configuré pour recevoir les informations opérationnelles entrées par l'utilisateur à la condition de recevoir l'instruction de démarrage du stationnement automatique, génère une instruction de commande de stationnement en fonction des informations opérationnelles, et envoie l'instruction de commande de stationnement au véhicule ; et
le véhicule configuré pour effectuer une opération de stationnement automatique conformément à l'instruction de commande de stationnement,
- le terminal mobile configuré pour :
recevoir et afficher des informations de stationnement actuelles du véhicule envoyées par le véhicule, les informations de stationnement actuelles du véhicule étant des informations d'état de divers systèmes associés du véhicule, dans lequel les informations de stationnement actuelles du véhicule comprennent l'un quelconque parmi des informations de stationnement normal, des informations de stationnement interrompu avec reprise possible et des informations de stationnement interrompu sans reprise possible, **caractérisé en ce que**
lorsque les informations de stationnement actuelles du véhicule sont les informations de stationnement interrompu avec reprise possible, après l'étape de réception et d'affichage des informations de stationnement actuelles du véhicule envoyées par le véhicule, le procédé comprend en outre : lorsque les informations de stationnement actuelles du véhicule sont les informations de stationnement normal, la génération et l'affichage d'informations demandant la reprise du stationnement ; et si de premières informations de confirmation de l'utilisateur pour les informations demandant la reprise du stationnement sont reçues dans un troisième temps prédéfini, la génération d'informations de reprise de stationnement et l'envoi des informations de reprise de stationnement au véhicule ; ou dans lequel, lorsque les informations de stationnement actuelles du véhicule sont les informations de stationnement interrompu sans reprise possible, après l'étape de réception et d'affichage des informations de stationnement actuelles du véhicule envoyées par le véhicule, le procédé comprend en outre : la génération d'informations de fin de stationnement et l'envoi des informations de fin de stationnement au véhicule ; ou
- le véhicule configuré pour :
acquérir des informations d'état envoyées par divers systèmes associés du véhicule, générer des informations de stationnement actuelles du véhicule et envoyer les informations de stationnement actuelles du véhicule au terminal mobile, dans lequel les informations de stationnement actuelles du véhicule comprennent l'un quelconque parmi des informations de stationnement normal, des informations de stationnement interrompu avec reprise possible et des informations de stationnement interrompu sans reprise possible, **caractérisé en ce que**
lorsque les informations de stationnement actuelles du véhicule sont les informations de stationnement interrompu avec reprise possible, après l'étape d'acquisition des informations d'état envoyées par divers systèmes associés du véhicule, de génération des informations de stationnement actuelles du véhicule, et d'envoi des informations de stationnement actuelles du véhicule au terminal mobile, le procédé comprend en outre : la réception d'informations de reprise de stationnement envoyées par le terminal mobile, et la génération d'une instruction de reprise de stationnement en fonction des informations de reprise de stationnement, et l'envoi de l'instruction de reprise de stationnement à divers systèmes associés du véhicule pour que divers systèmes associés du véhicule achèvent l'opération de stationnement automatique ; ou dans lequel, lorsque les informations de stationnement actuelles du véhicule sont les informations de stationnement interrompu sans reprise possible, après les étapes d'acquisition des informations d'état envoyées par divers systèmes associés du véhicule, de génération des informations de stationnement actuelles du véhicule et d'envoi des informations de stationnement actuelles du véhicule au terminal mobile, le procédé comprend en outre : la réception des informations de fin de stationnement envoyées par le terminal mobile, et la génération d'une instruction de fin de stationnement en fonction des informations de fin de stationnement, et l'envoi de l'instruction de fin de stationnement à divers systèmes associés du véhicule pour que divers systèmes associés du véhicule mettent fin à l'opération de stationnement automatique.

9. Dispositif de traitement informatique, dans lequel le dispositif de traitement informatique comprend :
une mémoire dans laquelle un code lisible par ordinateur est stocké ; et
un ou plusieurs processeurs, dans lequel lorsque le code lisible par ordinateur est exécuté par le ou les processeurs, le dispositif de traitement informatique exécute le procédé de stationnement automatique selon l'une quelconque des revendications 1 à 7.
